# EUROPEAN PATENT APPLICATION

(11) **EP 4 109 879 A1**
(43) Date of publication of application: **28.12.2022**
(21) Application number: 21767582.6
(22) Date of filing: 08.03.2021
(51) Int. Cl.: H04N 5/232

(54) **IMAGE COLOR RETENTION METHOD AND DEVICE**

(30) Priority: 13.03.2020 CN 202010177496; 25.03.2020 CN 202010220045
(71) Applicant: Huawei Technologies Co., Ltd., Shenzhen, Guangdong 518129, (CN)
(72) Inventor: CHEN, Xiaomeng, Shenzhen, Guangdong 518129 (CN); GUO, Xin, Shenzhen, Guangdong 518129 (CN)
(74) Representative: Maiwald GmbH
(86) International application number: PCT/CN2021/079603
(87) International publication number: WO 2021/180046

(57) **Abstract**

Embodiments of this application provide an image color retention method and a device, and relate to the field of electronic technologies, to retain colors of one or more individual objects in an image, and improve color retention flexibility and user experience. A specific solution is as follows: An electronic device starts a camera application, determines a first individual object as a target object, and determines a target processing mode; generates a first preview image based on an image obtained by a color camera; displays the first preview image on a preview interface, where an image of a first region in the first preview image is displayed in color, and an image of a second region in the first preview image is an image obtained after processing is performed according to the target processing mode; determines a second individual object as the target object in response to a first operation of a user; and displays a second preview image on the preview interface, where an image of a third region in the second preview image is displayed in color, and an image of a fourth region in the second preview image is an image obtained after processing is performed according to the target processing mode. Embodiments of this application are applied to image processing.

## Description

This application claims priority to Chinese Patent Application No. 202010177496.5, filed with the China National Intellectual Property Administration on March 13, 2020 and entitled "IMAGE COLOR RETENTION METHOD AND DEVICE", and claims priority to Chinese Patent Application No. 202010220045.5, filed with the China National Intellectual Property Administration on March 25, 2020 and entitled "IMAGE COLOR RETENTION METHOD AND DEVICE", which are incorporated herein by reference in their entireties.

### TECHNICAL FIELD

This application relates to the field of electronic technologies, and in particular, to an image color retention method and a device.

### BACKGROUND

With development of electronic technologies, a camera function and an image processing capability of an electronic device such as a mobile phone or a tablet computer are increasingly powerful. For example, the electronic device may use the camera function to capture a photo or a video with different effects in a plurality of modes such as a night mode, a wide aperture mode, or a multi-channel video recording mode. For another example, the electronic device may further perform processing such as filter processing or beauty processing on an image in the captured photo or video, to obtain a better image effect.

### SUMMARY

Embodiments of this application provide an image color retention method and a device, to retain colors of one or more individual objects in an image, and improve color retention flexibility and user experience.

To achieve the foregoing objective, the following technical solutions are used in embodiments of this application.

According to an aspect, an embodiment of this application provides an image color retention method, applied to an electronic device. The electronic device includes a color camera, and the method includes: The electronic device starts a camera application, and displays a preview interface. The electronic device determines a first individual object as a target object, and determines a target processing mode. The electronic device generates a first preview image based on an image obtained by the color camera, where the first preview image includes the first individual object and a second individual object, and the second individual object is different from the first individual object. The electronic device displays the first preview image on the preview interface, where an image of a first region in the first preview image is displayed in color, an image of a second region in the first preview image is an image obtained after processing is performed according to the target processing mode, the first region is an image region occupied by the first individual object in the first preview image, and the second region is a region other than the first region in the first preview image. The electronic device determines the second individual object as the target object in response to the first operation of the user. The electronic device displays a second preview image on the preview interface, where an image of a third region in the second preview image is displayed in color, an image of a fourth region in the second preview image is an image obtained after processing is performed according to the target processing mode, the third region is an image region occupied by the second individual object in the second preview image, and the fourth region is a region other than the third region in the second preview image.

In this solution, the first individual object and the second individual object each may include one individual object, or may include a plurality of individual objects. Before starting video recording, the electronic device may determine the target object and the target processing mode. Image colors of regions in which one or more individuals are located in the target object are retained. To be specific, the electronic device may retain a color of one individual, colors of a plurality of individuals of different types, or colors of a plurality of individuals of a same type by using a single individual as a unit, to improve color retention flexibility and precision, highlight the target object, and improve shooting experience of the user. In addition, a region other than the region in which the target object is located may be processed according to the target processing mode, to obtain a personalized image processing effect.

In a possible design, the method further includes: The electronic device switches the target processing mode in response to a second operation of the user. The electronic device updates, according to a switched target processing mode, the image of the fourth region in the preview image displayed on the preview interface.

In other words, during preview, the electronic device may further switch the target processing mode according to an indication of the user, to switch a processing effect of the region other than the region in which the target object is located.

In another possible design, before the electronic device determines the first individual object as the target object, the method further includes: The electronic device displays a third preview image on the preview interface, where the third preview image is a grayscale image converted from the image obtained by the color camera.

In other words, after the electronic device enters a color retention mode and before the electronic device determines the target object, the preview image may be a pure grayscale image, to distinguish the pure grayscale image from a color image in a non-color retention mode.

In another possible design, the method further includes: The electronic device displays a shooting interface in response to a video recording operation of the user, where the shooting interface includes a recorded image, and the recorded image includes the third region and the fourth region. The electronic device stops video recording and generates a video in response to a video recording stop operation of the user.

In this way, in a video image recorded by the electronic device, image colors of first regions in which one or more individuals are located in the target object are retained. To be specific, the electronic device may retain a color of one individual, colors of a plurality of individuals of different types, or colors of a plurality of individuals of a same type by using a single individual as a unit, to improve color retention flexibility and precision, highlight the target object, and improve shooting experience of the user. In addition, a region other than the region in which the target object is located may be post-processed according to the target mode, to obtain a personalized image processing effect.

According to another aspect, an embodiment of this application provides an image color retention method. The method is applied to an electronic device. The electronic device includes a color camera, and the method includes: The electronic device starts a camera application, and displays a preview interface. The electronic device displays a shooting interface in response to a video recording operation of a user. The electronic device determines a first individual object as a target object, and determines a target processing mode. The electronic device generates a first recorded image based on an image obtained by the color camera, where the first recorded image includes the first individual object and a second individual object, and the second individual object is different from the first individual object. The electronic device displays the first recorded image on the shooting interface, where an image of a first region in the first recorded image is displayed in color, an image of a second region in the first recorded image is an image obtained after processing is performed according to the target processing mode, the first region is an image region occupied by the first individual object in the first recorded image, and the second region is a region other than the first region in the first recorded image. The electronic device determines the second individual object as the target object in response to a first operation of the user. The electronic device displays a second recorded image on the shooting interface, where an image of a third region in the second recorded image is displayed in color, an image of a fourth region in the second recorded image is an image obtained after processing is performed according to the target processing mode, the third region is an image region occupied by the second individual object in the second recorded image, and the fourth region is a region other than the third region in the second recorded image. The electronic device stops video recording and generates a video in response to a video recording stop operation of the user.

In this solution, the first individual object and the second individual object each may be one individual object, or may be a plurality of individual objects. After starting video recording, the electronic device may determine the target object and the target processing mode. During video recording, the electronic device may perform color retention processing and post-processing on the captured image, to capture a video. In a video image, image colors of first regions in which one or more individuals are located in the target object are retained. To be specific, the electronic device may retain a color of one individual, colors of a plurality of individuals of different types, or colors of a plurality of individuals of a same type by using a single individual as a unit, to improve color retention flexibility and precision, highlight the target object, and improve shooting experience of the user. In addition, a region other than the region in which the target object is located may be processed according to the target processing mode, to obtain a personalized video image.

In a possible design, before the electronic device determines the first individual object as the target object, the method further includes: The electronic device displays a third recorded image on the shooting interface, where the third recorded image is a grayscale image converted from an image obtained by the color camera.

In other words, after entering a color retention mode and before determining the target object, the electronic device may first display a pure grayscale image, to distinguish the pure grayscale image from a color image in a non-color retention mode.

In another possible design, the preview image displayed on the shooting interface includes a third individual object, and the third individual object is different from the second individual object. Before the electronic device stops video recording and generates the video, the method further includes: The electronic device determines the third individual object as the target object in response to a third operation of the user. The electronic device displays a fourth recorded image on the shooting interface, where an image of a fifth region in the fourth recorded image is displayed in color, an image of a sixth region in the fourth recorded image is an image obtained after processing is performed according to the target processing mode, the fifth region is an image region occupied by the third individual object in the fourth recorded image, and the sixth region is a region other than the fifth region in the fourth recorded image.

In other words, during shooting, the electronic device may change an individual object included in the target object according to an indication of the user, to capture a video in which the target object dynamically changes.

In another possible design, before the electronic device stops video recording and generates the video, the method further includes: The electronic device switches the target processing mode in response to a second operation of the user. The electronic device updates, according to a switched target processing mode, the image of the fourth region in the recorded image displayed on the shooting interface.

In other words, during video recording, the electronic device may change the target processing mode according to an indication of the user, to capture a video in which a post-processing effect dynamically changes, and obtain personalized and diversified video images.

In another possible design, that the electronic device determines a first individual object as a target object includes: The electronic device determines the first individual object as a character in the image obtained by the color camera, where the first individual object is the target object. Alternatively, the electronic device determines the first individual object as the target object in response to an operation performed by the user on the first individual object.

In other words, after entering a color retention mode, the electronic device may use a default target object, or determine the target object according to an indication operation of the user.

In another possible design, the target processing mode is a first mode, and the image of the second region is a grayscale image obtained after processing is performed according to the first mode. Alternatively, the target processing mode is a second mode, and the image of the second region is a blurred image obtained after processing is performed according to the second mode. Alternatively, the target processing mode is a third mode, and the image of the second region is an image that is obtained after processing is performed according to the third mode and that is replaced with another image.

In another possible design, that the electronic device determines a target processing mode includes: The electronic device determines the target processing mode as a default first mode.

In other words, after the electronic device enters a color retention mode, the target processing mode is a graying processing mode by default.

According to another aspect, an embodiment of this application provides a color retention processing method. The method is applied to an electronic device. The electronic device includes a color camera, and the method includes: The electronic device starts a camera application, and displays a preview interface. The electronic device determines a first individual object as a target object, and determines a target processing mode. The electronic device generates a first preview image based on an image obtained by the color camera, where the first preview image includes the first individual object and a second individual object, and the second individual object is different from the first individual object. The electronic device displays the first preview image on the preview interface, where an image of a first region in the first preview image is displayed in color, an image of a second region in the first preview image is an image obtained after processing is performed according to the target processing mode, the first region is an image region occupied by the first individual object in the first preview image, and the second region is a region other than the first region in the first preview image. The electronic device determines the second individual object as the target object in response to a first operation of a user. The electronic device displays a second preview image on the preview interface, where an image of a third region in the second preview image is displayed in color, an image of a fourth region in the second preview image is an image obtained after processing is performed according to the target processing mode, the third region is an image region occupied by the second individual object in the second preview image, and the fourth region is a region other than the third region in the second preview image. The electronic device generates a photo in response to a photographing operation of the user, where the photo includes the third region and the fourth region.

In this solution, the electronic device may perform color retention processing and post-processing on the captured image, to capture a photo. In the photo, colors of first regions in which one or more individuals are located in the target object are retained. To be specific, the electronic device may retain a color of one individual, colors of a plurality of individuals of different types, or colors of a plurality of individuals of a same type by using a single individual as a unit, to improve color retention flexibility and precision, highlight the target object, and improve shooting experience of the user. In addition, an image of a region other than the region in which the target object is located may be post-processed according to the target mode, to obtain personalized and diversified photos.

In a possible design, the method further includes: The electronic device switches the target processing mode in response to a second operation of the user. The electronic device updates the image of the fourth region according to a switched target processing mode.

In another possible design, before the electronic device determines the first individual object as the target object, the method further includes:
The electronic device displays a third preview image on the preview interface, where the third preview image is a grayscale image converted from the image obtained by the color camera.

According to another aspect, an embodiment of this application provides an image color retention method, including: An electronic device detects a fifth operation performed by a user on a target image, where the target image is a color image. The electronic device enters a target editing mode, and displays a first interface, where a target image on the first interface is a grayscale image. After detecting an operation performed by the user on a first location, the electronic device restores, to "color", a pixel that is in the target image and whose difference from a pixel value of the first location is less than a preset threshold.

In this solution, the electronic device may edit the obtained target image, to retain a specific color in the target image, and obtain a personalized image processing effect.

In a possible design, that the electronic device restores, to "color", a pixel that is in the target image and whose difference from a pixel value of the first location is less than a preset threshold includes: The electronic device restores, to "color", a pixel that is in a part to which the first location belongs in the target image and whose difference from the pixel value of the first location is less than the preset threshold. Alternatively, the electronic device restores, to "color", a pixel that is in an individual to which the first location belongs in the target image and whose difference from the pixel value of the first location is less than the preset threshold.

In other words, the electronic device may retain colors of some regions in the target image by using an individual or a part as a unit based on a color specified by the user.

In another possible design, the first interface further includes a first control, and the method further includes: If the first control is selected, and the electronic device detects a sixth operation performed by the user on a seventh region in the color image by using the first control, the electronic device changes the color image in the seventh region to a grayscale image.

In this way, the user may change a region that changes to a color image to a grayscale image again by using the first control.

In another possible design, the first interface further includes a second control, and the method further includes: The electronic device adjusts an area of a scope of the first control after detecting an operation performed by the user on the second control.

In other words, the electronic device may adjust a size of the scope of the first control.

According to another aspect, an embodiment of this application provides an image color retention method, including: An electronic device detects a fifth operation performed by a user on a target image, where the target image is a color image. The electronic device enters a target editing mode, and displays a first interface, where a target image on the first interface is a grayscale image. After detecting an operation performed by the user on a first location, the electronic device restores, to "color", a part to which the first location in the target image belongs.

In this solution, the electronic device may edit the obtained target image, to retain a color of a specific part in the target image, obtain a personalized image processing effect, and improve flexibility and accuracy of color retention setting.

According to another aspect, an embodiment of this application provides an image color retention method, including: An electronic device detects a fifth operation performed by a user on a target image, where the target image is a color image. The electronic device enters a target editing mode, and displays a first interface, where a target image on the first interface is a grayscale image. After detecting an operation performed by the user on a first location, the electronic device restores, to "color", an individual to which the first location in the target image belongs.

In this solution, the electronic device may edit the obtained target image, to retain a color of a specific individual in the target image, obtain a personalized image processing effect, and improve flexibility and accuracy of color retention setting.

According to another aspect, an embodiment of this application provides an image color retention method, including: An electronic device detects a seventh operation performed by a user on a target image. The electronic device enters a target editing mode, and displays a second interface, where the second interface includes an eighth region, a ninth region, and a third control, and an image of the ninth region is a blurred image. The electronic device adjusts a blurring degree of the image of the ninth region after detecting an operation performed by the user on the third control.

In this solution, the electronic device may edit the obtained target image, to retain a clear image of a part of region, and change the other part of the region into a blurred image.

In a possible design, the second interface further includes a fourth control, and the fourth control is used to switch a shape of the eighth region. After detecting an operation performed by the user on the fourth control, the electronic device adjusts the eighth region based on a switched shape.

In other words, the user may indicate a shape of a region in which the clear image is located, for example, the shape may be a circle or a square.

In another possible design, the method further includes: The electronic device adjusts a size of the eighth region after detecting an eighth operation performed by the user on the eighth region.

In other words, the electronic device may adjust a size of the region in which the clear image is located.

According to another aspect, an embodiment of this application provides an image processing apparatus. The apparatus is included in an electronic device. The apparatus has a function of implementing behavior of the electronic device in any method in the foregoing aspects and possible designs, so that the electronic device performs the image color retention method performed by the electronic device in any possible design in the foregoing aspects. The function may be implemented by hardware, or may be implemented by hardware executing corresponding software. The hardware or the software includes at least one module or unit corresponding to the function. For example, the apparatus may include a display unit, a determining unit, a detection unit, and an update unit.

According to still another aspect, an embodiment of this application provides an electronic device, including: a color camera, configured to capture a color image; a screen, configured to display an interface; one or more processors; and a memory, where the memory stores code. When the code is executed by the electronic device, the electronic device is enabled to perform the image color retention method performed by the electronic device in any possible design of the foregoing aspects.

According to still another aspect, an embodiment of this application provides an electronic device, including one or more processors and a memory, where the memory stores code. When the code is executed by the electronic device, the electronic device is enabled to perform the image color retention method performed by the electronic device in any possible design of the foregoing aspects.

According to another aspect, an embodiment of this application provides a computer-readable storage medium, including computer instructions. When the computer instructions are run on an electronic device, the electronic device is enabled to perform the image color retention method in any possible design of the foregoing aspects.

According to still another aspect, an embodiment of this application provides a computer program product. When the computer program product is run on a computer, the computer is enabled to perform the image color retention method performed by the electronic device in any possible design of the foregoing aspects.

According to another aspect, an embodiment of this application provides a chip system. The chip system is applied to an electronic device. The chip system includes one or more interface circuits and one or more processors. The interface circuit and the processor are interconnected through a line. The interface circuit is configured to receive a signal from a memory of the electronic device, and send the signal to the processor. The signal includes computer instructions stored in the memory. When the processor executes the computer instructions, the electronic device is enabled to perform the image color retention method in any possible design of the foregoing aspects.

For beneficial effects corresponding to the foregoing other aspects, refer to descriptions of beneficial effects of the method aspects. Details are not described herein.

### BRIEF DESCRIPTION OF DRAWINGS

FIG. 1A is a schematic diagram of a hardware structure of an electronic device according to an embodiment of this application;
FIG. 1B is a flowchart of an image color retention method according to an embodiment of this application;
FIG. 2 is a schematic diagram of a software architecture of an electronic device according to an embodiment of this application;
FIG. 3 is a flowchart of another image color retention method according to an embodiment of this application;
FIG. 4(a) to FIG. 4(c) are a schematic diagram of a group of interfaces according to an embodiment of this application;
FIG. 5 is a schematic diagram of another group of interfaces according to an embodiment of this application;
FIG. 6 is a schematic diagram of another group of interfaces according to an embodiment of this application;
FIG. 7 is a schematic diagram of a group of instance segmentation and semantic segmentation effects according to an embodiment of this application;
FIG. 8(a) to FIG. 8(c) are a schematic diagram of another group of interfaces according to an embodiment of this application;
FIG. 9(a) to FIG. 9(d) are a schematic diagram of another group of interfaces according to an embodiment of this application;
FIG. 10(a) to FIG. 10(c) are a schematic diagram of another group of interfaces according to an embodiment of this application;
FIG. 11(a) to FIG. 11(c) are a schematic diagram of another group of interfaces according to an embodiment of this application;
FIG. 12(a) and FIG. 12(b) are a schematic diagram of another group of interfaces according to an embodiment of this application;
FIG. 13A is a schematic diagram of another group of interfaces according to an embodiment of this application;
FIG. 13B(a) to FIG. 13B(f) are a schematic diagram of a group of images and interfaces according to an embodiment of this application;
FIG. 13C(a) to FIG. 13C(f) are a schematic diagram of another group of images and interfaces according to an embodiment of this application;
FIG. 13D(a) to FIG. 13D(e) are a schematic diagram of another group of images and interfaces according to an embodiment of this application;
FIG. 13E is a schematic diagram of an interface according to an embodiment of this application;
FIG. 14(a) to FIG. 14(d) are a schematic diagram of another group of interfaces according to an embodiment of this application;
FIG. 15(a) to FIG. 15(c) are a schematic diagram of another group of interfaces according to an embodiment of this application;
FIG. 16 is a schematic diagram of another group of interfaces according to an embodiment of this application;
FIG. 17(a) to FIG. 17(d) are a schematic diagram of another group of interfaces according to an embodiment of this application;
FIG. 18 is a flowchart of another image color retention method according to an embodiment of this application;
FIG. 19(a) to FIG. 19(c) are a schematic diagram of another group of interfaces according to an embodiment of this application;
FIG. 20 is a flowchart of another image color retention method according to an embodiment of this application;
FIG. 21 is a schematic diagram of a shooting interface and a captured photo according to an embodiment of this application;
FIG. 22(a) to FIG. 22(d) are a schematic diagram of another group of interfaces according to an embodiment of this application;
FIG. 23 is a schematic diagram of another interface according to an embodiment of this application;
FIG. 24 is a flowchart of another image color retention method according to an embodiment of this application;
FIG. 25 is a schematic diagram of another group of interfaces according to an embodiment of this application;
FIG. 26 is a schematic diagram of another group of interfaces according to an embodiment of this application; and
FIG. 27 is a schematic diagram of another group of interfaces according to an embodiment of this application.

### DESCRIPTION OF EMBODIMENTS

The following describes technical solutions in embodiments of this application with reference to the accompanying drawings in embodiments of this application. In descriptions of embodiments of this application, unless otherwise specified, "/" means "or". For example, A/B may represent A or B. In this specification, "and/or" describes only an association relationship of associated objects and represents that three relationships may exist. For example, A and/or B may represent the following three cases: Only A exists, both A and B exist, and only B exists. In addition, in the descriptions of embodiments of this application, "a plurality of' means two or more.

The following terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of' means two or more.

Embodiments of this application provide an image color retention method, so that colors of one or more individual objects can be retained during photographing or video recording, and color retention processing can be further performed on an obtained image, to retain the colors of the one or more individual objects. Based on this solution, the electronic device may perform image color retention by using an individual object as a unit, to implement a personalized image processing effect, and improve color retention flexibility and user experience.

The image color retention method provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

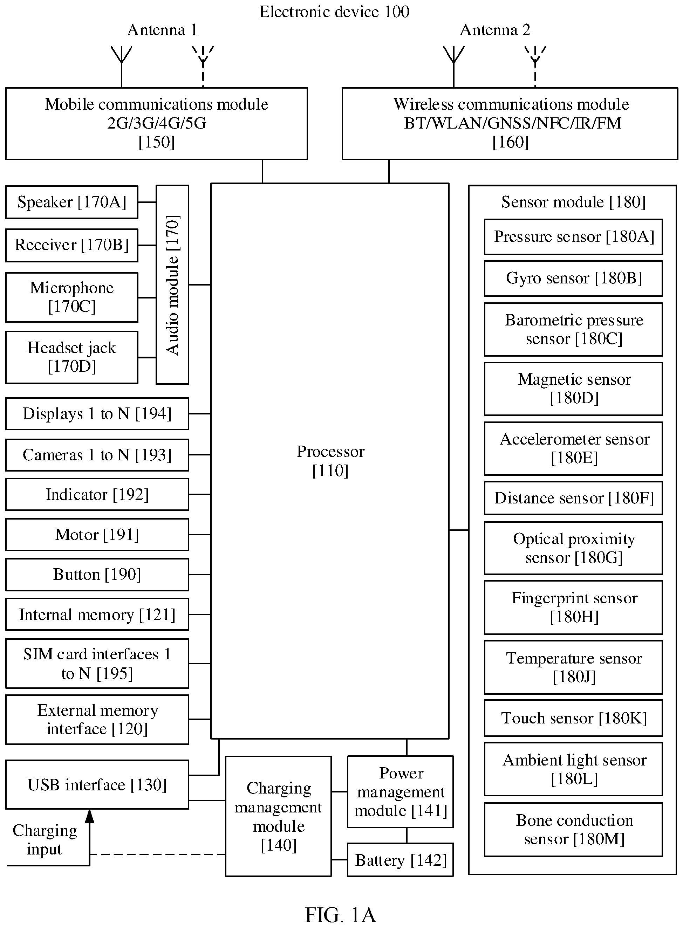

For example, FIG. 1A is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to increase antenna utilization. For example, the antenna 1 may be multiplexed as a diversity antenna of a wireless local area network. In some other embodiments, the antenna may be used in combination with a tuning switch.

The mobile communications module 150 can provide a solution, applied to the electronic device 100, to wireless communication including 2G/3G/4G/5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transfer a processed electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some function modules in the mobile communications module 150 may be disposed in the processor 110. In some embodiments, at least some function modules in the mobile communications module 150 may be disposed in a same device as at least some modules in the processor 110.

The wireless communications module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigational satellite system (global navigation satellite system, GNSS), frequency modulation (frequency modulation, FM), near field communication (near field communication, NFC), an infrared (infrared, IR) technology, and the like. The wireless communications module 160 may be one or more components integrating at least one communication processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

The electronic device 100 implements a display function through the GPU, the display 194, the application processor, and the like. The GPU is a microprocessor for image processing, and connects the display 194 to the application processor. The GPU is configured to perform mathematical and geometric calculation, and is configured to perform graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. In embodiments of this application, the display 194 may be configured to display a shooting preview interface and a shooting interface during shooting, an image editing interface, and the like.

The electronic device 100 may implement a shooting function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a shooting scenario. In some embodiments, the ISP may be disposed in the camera 193.

The camera 193 is configured to capture a static image or a video. An object generates an optical image through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

In embodiments of this application, the camera 193 is a color camera. Different from a grayscale image (also referred to as a monochrome image) that can be captured by using a monochrome camera, a color image is captured by the electronic device 110 by using the color camera, to record a color of a photographed object. For example, each pixel value in the color image may include three primary colors: R (red), G (green), and B (blue).

In addition, the camera 193 may include one or more of the following cameras: a long-focus camera, a wide-angle camera, an ultra-wide-angle camera, a depth camera, or the like. The depth camera may be configured to measure a distance of a photographed object. The long-focus camera has a small shooting range, and is applicable to shooting a distant object. The wide-angle camera has a relatively large shooting range. The ultra-wide-angle camera has a larger shooting range than the wide-angle camera, and is applicable to shooting an object in a relatively large picture such as a panorama.

The digital signal processor is configured to process a digital signal, and may further process another digital signal in addition to a digital image signal. For example, when the electronic device 100 selects a frequency, the digital signal processor is configured to perform Fourier transform on energy of the frequency.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding. In embodiments of this application, the NPU may perform instance segmentation on an image, to distinguish between regions in which different individuals are located in the image. In some embodiments, the NPU may further perform part segmentation on an image, to distinguish between regions in which different parts of a same individual are located.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer executable program code. The executable program code includes instructions. The processor 110 runs the instructions stored in the internal memory 121, to implement various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) created in a process of using the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

In embodiments of this application, the processor 110 may retain colors of one or more individual objects in an image by running the instructions stored in the internal memory 121, and perform post-processing such as graying, blurring, or background replacement on a background other than the one or more individual objects.

The electronic device 100 may implement an audio function such as music playing or recording through the audio module 170, the speaker 170A, the receiver 170B, the microphone 170C, the headset jack 170D, the application processor, and the like.

The distance sensor 180F is configured to measure a distance. The electronic device 100 may measure a distance in an infrared or a laser manner. In some embodiments, in a shooting scenario, the electronic device 100 may measure a distance through the distance sensor 180F to implement quick focusing.

The ambient light sensor 180L is configured to sense ambient light luminance. The electronic device 100 may adaptively adjust luminance of the display 194 based on the sensed ambient light luminance. The ambient light sensor 180L may also be configured to automatically adjust white balance during photographing. The ambient light sensor 180L may further cooperate with the optical proximity sensor 180G to detect whether the electronic device 100 is in a pocket, to prevent an accidental touch.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer the detected touch operation to the application processor, to determine a type of a touch event. The display 194 may provide a visual output related to the touch operation. In some other embodiments, the touch sensor 180K may alternatively be disposed on a surface of the electronic device 100 at a location different from that of the display 194.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

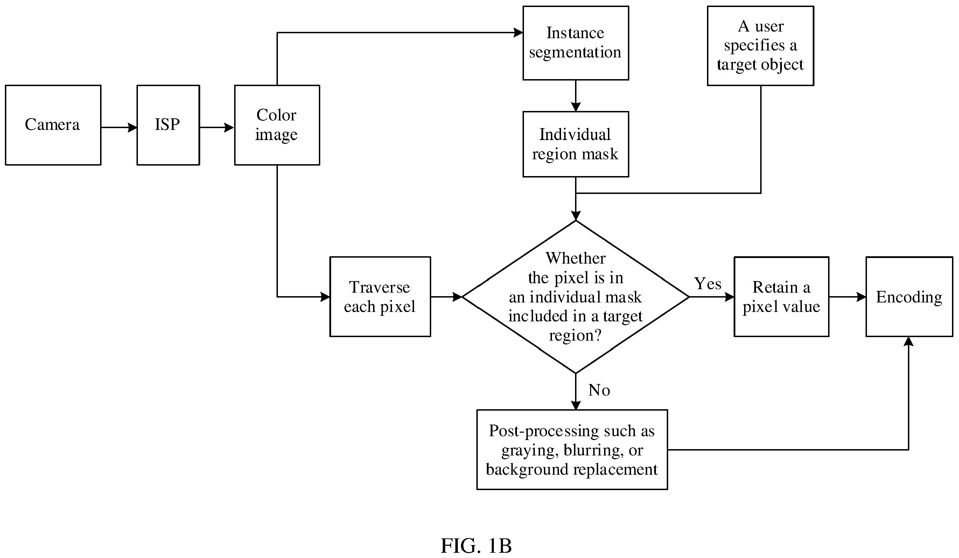

In embodiments of this application, the NPU in the processor 110 may perform instance segmentation on an image, to determine regions in which different individuals are located in the image. In a shooting scenario, as shown in FIG. 1B, the camera 193 and the ISP may capture a color image, and the NPU in the processor 110 may perform instance segmentation on an image obtained after processing is performed by the ISP, to determine mask (mask) regions in which different individuals are located in the image. The processor 110 may traverse each pixel in the color image. If the pixel is in mask regions in which one or more individuals included in a target object (for example, specified by a user) are located, post-processing such as graying, blurring, or background replacement is performed on the pixel. If the pixel is not in the region in which the target object is located, a pixel value of the pixel is retained. Therefore, the processor 110 may retain, by using an individual object as a unit, colors of regions in which one or more specific individual objects are located, and perform post-processing such as graying, blurring, or background replacement on the other region, to improve color retention flexibility and user experience. In a video recording scenario, the video codec may further encode post-processed image data, to generate a video file in a specific format.

A software system of the electronic device 100 may use a layered architecture, an event-driven architecture, a microkernel architecture, a micro service architecture, or a cloud architecture. In embodiments of this application, an Android system with a layered architecture is used as an example to illustrate a software structure of the electronic device 100.

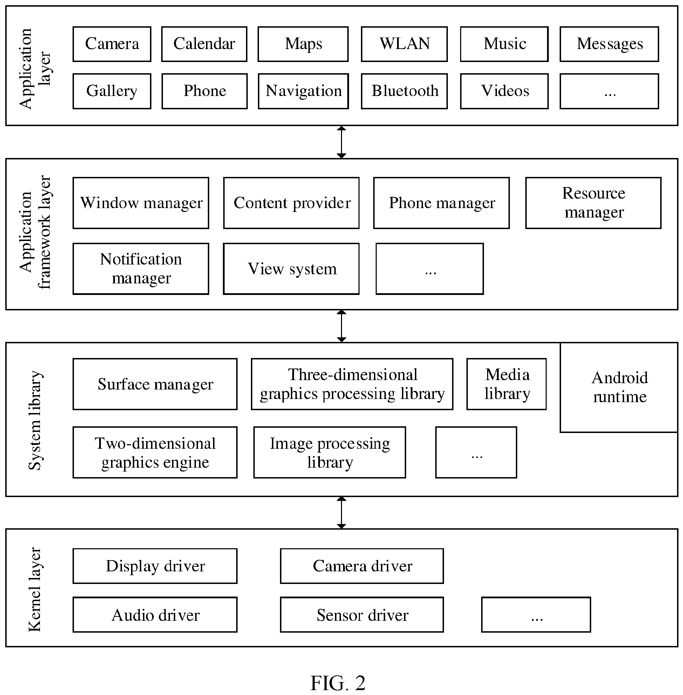

FIG. 2 is a block diagram of a software structure of the electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, an address book, and the like.

The view system includes visual controls, such as a control for displaying a text and a control for displaying a picture. The view system may be configured to construct an application. A display interface may include one or more views. For example, a display interface including a Messages notification icon may include a text display view and a picture display view.

The phone manager is configured to provide a communication function of the electronic device 100, for example, management of a call status (including answering or declining a call).

The resource manager provides an application with various resources such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion and give a message notification. The notification manager may alternatively be a notification that appears in a top status bar of the system in a form of a graph or a scroll bar text, for example, a notification of an application running on the background, or may be a notification that appears on the screen in a form of a dialog window. For example, text information is displayed in the status bar, an alert sound is played, the electronic device vibrates, or the indicator light blinks.

The Android runtime includes a kernel library and a virtual machine. The Android runtime is responsible for scheduling and managing the Android system.

The kernel library includes two parts: a function that needs to be invoked in Java language, and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In embodiments of this application, as shown in FIG. 2, the system library may further include an image processing library. The image processing library may obtain, through instance segmentation, regions in which different individual objects are respectively located in an image, and retain, by using an individual object as a unit, pixel values of pixels in regions in which one or more specific individual objects are located, to retain colors of the one or more individual objects, and perform processing such as graying, blurring, or background replacement on a region other than the regions in which the one or more individual objects are located.

For ease of understanding, in the following embodiments of this application, an example in which the electronic device is a mobile phone having the structures shown in FIG. 1A and FIG. 2 is used to describe an image color retention method provided in embodiments of this application with reference to the accompanying drawings.

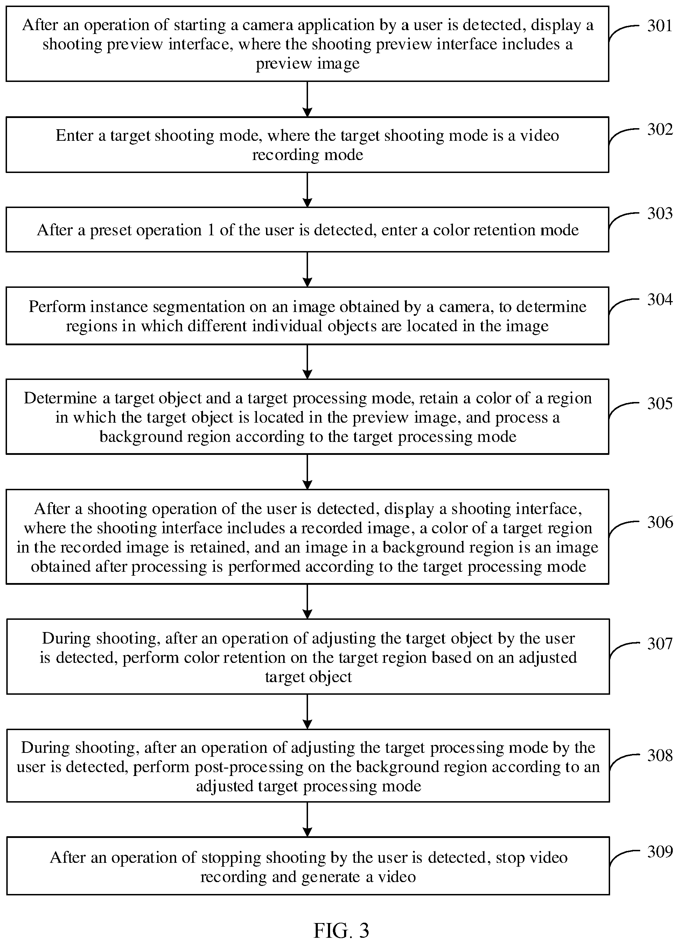

An embodiment of this application provides an image color retention method, which may be applied to a video recording scenario. As shown in FIG. 3, the method includes the following steps.

301: After detecting an operation of starting a camera application by a user, the mobile phone displays a shooting preview interface, where the shooting preview interface includes a preview image.

After detecting the operation of starting the camera application by the user, the mobile phone may start the camera application (which may also be referred to as a camera for short below), and display the shooting preview interface. The shooting preview interface includes the preview image. In this case, the preview image is an original image obtained by the camera and an ISP, and the original image is a color image.

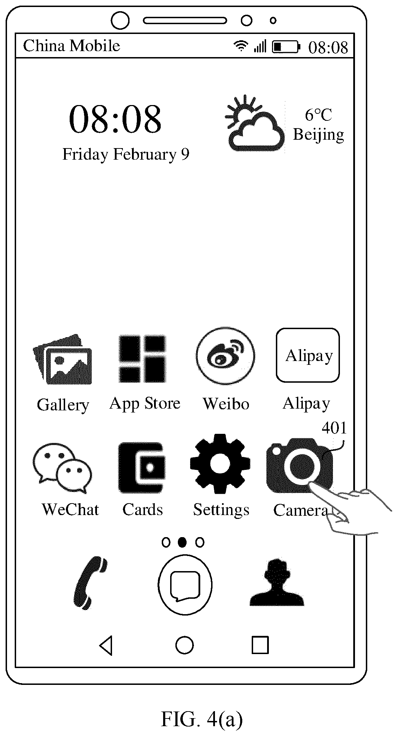

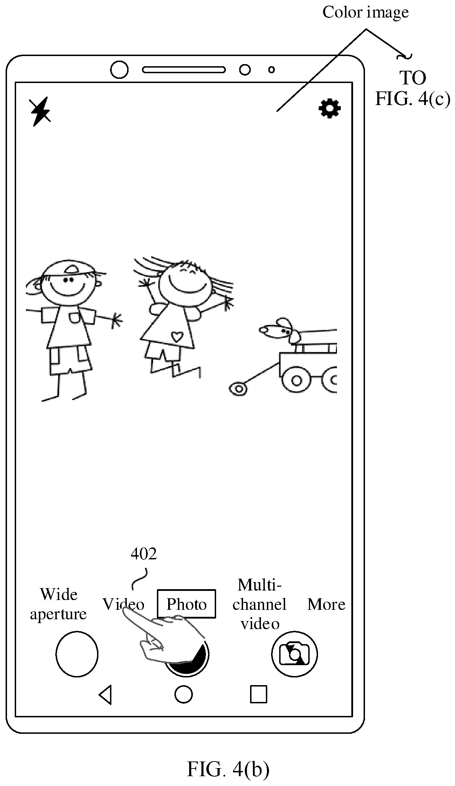

There may be a plurality of operations of starting the camera by the user. For example, the operation of starting the camera by the user may be an operation of tapping a camera icon 401 shown in FIG. 4(a). After detecting the operation, the mobile phone may start the camera application, and display a shooting preview interface shown in FIG. 4(b). The shooting preview interface includes a preview image, and the preview image is a color image captured by the camera.

For another example, the operation of starting the camera by the user may be a voice indication operation of starting the camera. After detecting the operation, the mobile phone may start the camera application, and display a shooting preview interface shown in FIG. 4(b).

302: The mobile phone enters a target shooting mode, where the target shooting mode is a video recording mode.

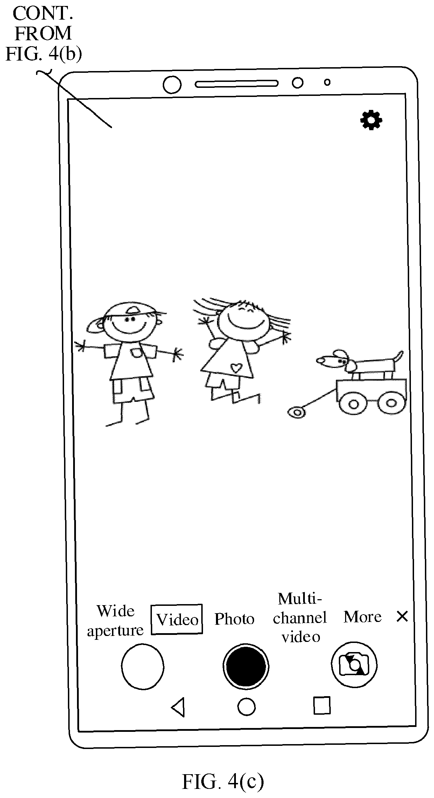

In some implementations, after starting the camera application, the mobile phone enters a non-video recording mode such as a photographing mode by default. After detecting an indication operation of entering a video recording mode by the user, the mobile phone enters the video recording mode. For example, after starting the camera, the mobile phone enters a photographing mode by default, and displays a shooting preview interface in a photographing mode shown in FIG. 4(b). After detecting an operation of tapping a control 402 shown in FIG. 4(b) by the user, the mobile phone enters a video recording mode, and displays a shooting preview interface in a video recording mode shown in FIG. 4(c).

In some other implementations, after starting the camera application, the mobile phone enters a video recording mode by default (for example, a video recording mode is used after the camera application is started last time), and displays a shooting preview interface in a video recording mode shown in FIG. 4(c).

The mobile phone may alternatively enter a video recording mode in another manner. This is not limited in this embodiment of this application.

303: After detecting a preset operation 1 of the user, the mobile phone enters a color retention mode.

In the color retention mode, the mobile phone may perform color retention processing on the color image obtained by the camera, so that regions in which one or more individual objects are located in the image are retained to "color", and post-processing such as graying, blurring, or background replacement is performed on the other region.

The preset operation 1 is used to indicate the mobile phone to enter the color retention mode. After entering the color retention mode, the mobile phone displays a shooting preview interface, and the shooting preview interface includes a preview image.

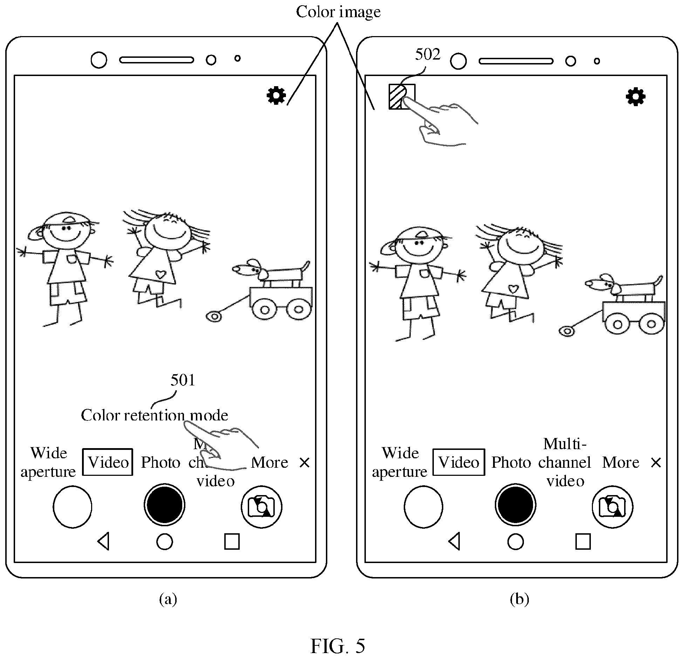

There may be a plurality of manners in which the user indicates the mobile phone to enter the color retention mode. For example, in some embodiments, the shooting preview interface includes a control 1 used to indicate the color retention mode. After the mobile phone detects an operation of tapping the control 1 by the user, the mobile phone enters the color retention mode. For example, the control 1 may be a control 501 shown in (a) in FIG. 5, or a control 502 shown in (b) in FIG. 5.

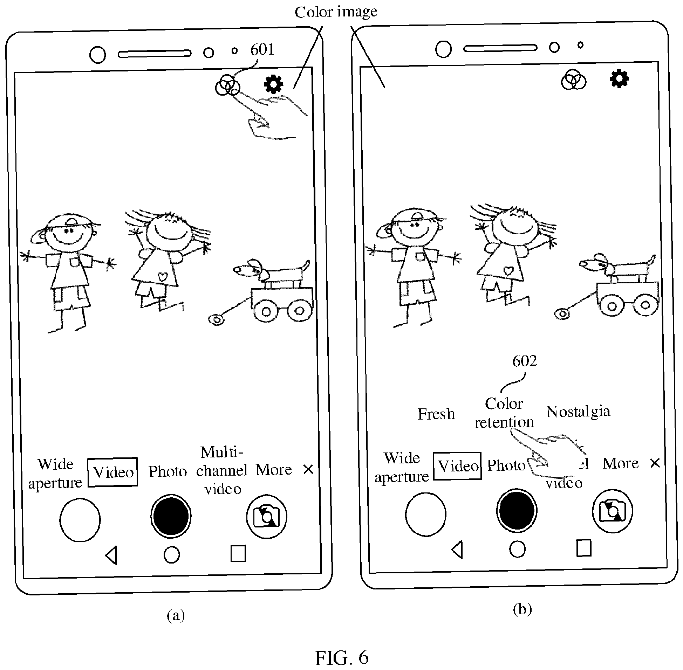

In some other embodiments, as shown in (a) in FIG. 6, the shooting preview interface includes a filter control 601. After the mobile phone detects that the user taps the control 601, as shown in (b) in FIG. 6, the mobile phone displays a control 602 used to indicate the color retention mode. After detecting that the user taps the control 602, the mobile phone enters the color retention mode.

In some other embodiments, after the mobile phone displays the shooting preview interface, if the mobile phone detects that the user enters the color retention mode or performs a voice indication operation of using a color retention function, the mobile phone enters the color retention mode.

304: The mobile phone performs instance segmentation on the image obtained by the camera, to determine regions in which different individual objects are located in the image.

Instance segmentation means distinguishing between different individuals in objects of a same type based on semantic segmentation. Semantic segmentation means performing pixel-level segmentation on an object in an image, to determine an object type to which a pixel belongs. For example, the object type may include a character, a vehicle, a building, a tree, a dog, or a cat. Objects of a same type in one image may include one or more individual objects. For example, the one image may include a plurality of characters or a plurality of vehicles.

There may be a plurality of instance segmentation methods, for example, a convolutional neural network (convolutional neural network, CNN)-based segmentation method, a threshold-based segmentation method, a regionbased segmentation method, an edge-based segmentation method, and a specific theory-based segmentation method. Instance segmentation means obtaining a region in which each portrait or each object is located in an image through segmentation.

An example in which instance segmentation is performed by using a CNN-based deep learning algorithm is used for description. Based on this algorithm, after the camera obtains an original image, the mobile phone may perform downsampling on the original image, and convert the original image into an image with a relatively low resolution for complex CNN calculation, to reduce a calculation amount. The mobile phone processes an M×N size (that is, a resolution of M×N) of the original image into an m×n size, where m is less than M, and n is less than N. The mobile phone extracts semantic features of images layer by layer through convolution and downsampling operations (including but not limited to stride convolution, pooling pooling, and the like), to obtain multi-scale feature maps whose sizes are respectively m1×n1, m2×n2, and m3×n3, where m1, m2, and m3 are in a multiple relationship and are less than m, and n1, n2, and n3 are in a multiple relationship and are less than n. Then, the mobile phone performs an operation to obtain a location of a to-be-segmented target (for example, a character, a vehicle, or a building) in the image, obtains a region in which the target is located through regression, frames a bounding box (bounding box) of the region in which the target is located, and provides coordinates of the target in the image. In this way, the mobile phone implements target detection. After performing target detection, the mobile phone performs image instance segmentation in each bounding box, to obtain a region (or referred to as a mask region) in which each individual object (referred to as an individual below) is located, so as to complete an instance segmentation operation.

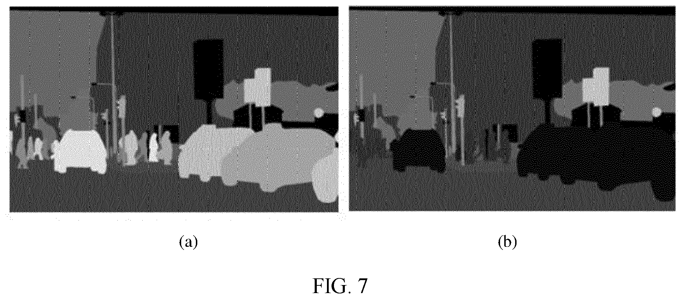

For example, for a result of instance segmentation performed by the mobile phone on an image captured by the camera, refer to (a) in FIG. 7. The mobile phone identifies regions in which different individuals are respectively located. Regions in which different individuals are located correspond to different grayscale values, and a region in which one individual is located correspond to one grayscale value. For a result of semantic segmentation performed by the mobile phone on the image, refer to (b) in FIG. 7. The mobile phone identifies regions in which objects of different types are located. Regions in which objects of different types are located correspond to different grayscale values, and regions in which objects of a same type are located correspond to a same grayscale value.

305: The mobile phone determines a target object and a target processing mode, retains a color of a region in which the target object is located in the preview image, and processes a background region according to the target processing mode, where the target object includes one or more individuals, and the plurality of individuals belong to a same type or different types.

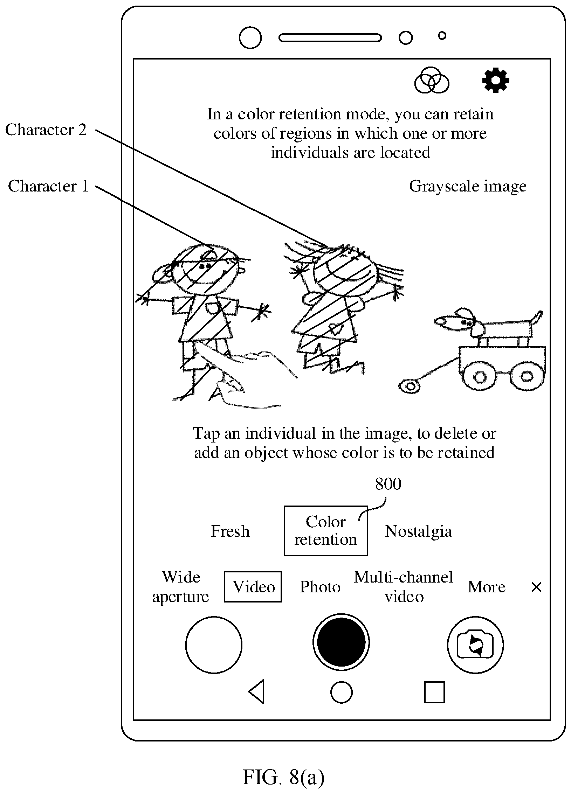

In some embodiments, after entering the color retention mode, the mobile phone may display text information, a control, a mark, or the like corresponding to the color retention mode, to notify the user that the mobile phone is currently in the color retention mode. For example, as shown in FIG. 8(a), a control 800 is selected to indicate that the mobile phone is currently in the color retention mode.

In some other embodiments, after the mobile phone enters the color retention mode for the first time or each time the mobile phone enters the color retention mode, the mobile phone may notify the user of a function and an effect of the color retention mode by using display information, a sound prompt, or the like. For example, as shown in FIG. 8(a), the mobile phone may prompt, by displaying the text information, the user that "in the color retention mode, you can retain colors of regions in which one or more individuals are located".

After entering the color retention mode, the mobile phone may determine the target processing mode, and perform, according to the target processing mode, post-processing on a region other than a region in which the target object whose color is to be retained is located, to obtain personalized and diversified image processing effects. The target object may include one or more individual objects. In this embodiment of this application, the region in which the target object is located may be referred to as a target region, and the region other than the region in which the target object is located may be referred to as a background region.

For example, the target processing mode may include a graying mode, a blurring mode, or a background replacement mode.

When the target processing mode is the graying mode, in some embodiments, the mobile phone may convert a pixel value of a pixel in the background region into a grayscale value when retaining an image color in the target region, and convert a color image in the background region into a grayscale image (also referred to as a monochrome image), to highlight the target object. A pixel value is used to indicate a color of a pixel. For example, the pixel value may be an RGB value. In the graying mode, the mobile phone may process an RGB value of the pixel in the background region as follows: R value = G value = B value.

In some other embodiments, the mobile phone may convert a pixel value of a pixel in the background region into a pixel value of a specific value when retaining an image color in the target region, to convert an image in the background region into a specific color. For example, the mobile phone may convert the image of the pixel in the background region into blue, red, black, or white.

When the target processing mode is the blurring mode, the mobile phone may perform blurring processing on the background region when retaining an image color in the target region and clearly displaying an image in the region in which the target object is located, to highlight the target object. In some embodiments, if the target processing mode is the blurring mode, the mobile phone may further adjust a blurring degree of the background region based on an indication operation of the user.

When the target processing mode is the background replacement mode, the mobile phone may replace an image in the background region with an image in a region at a same location on a background image (that is, another image) when retaining an image color in the target region, to implement random replacement of a target object background, and obtain a personalized image.

If the target processing mode is the background replacement mode, the mobile phone may further prompt the user to select a to-be-replaced background image, to subsequently replace the background region with a region at a corresponding location on the background image. If the user does not select a background image, the mobile phone performs background replacement by using a default background image. In some embodiments, a location, a size, or the like of the target object in the background image may be further adjusted based on an indication operation of the user.

In some embodiments, after entering the color retention mode, the mobile phone may determine the target processing mode based on an indication operation of the user.

In some other embodiments, after entering the color retention mode, the target processing mode is a preset processing mode or a processing mode used last time. The mobile phone may further switch the target processing mode based on an indication operation of the user.

In step 305, the mobile phone may determine the target object, to retain the color of the region in which the target object is located. For example, the mobile phone may set one or more individuals included in the target object based on an indication operation of the user by using an individual as a selection unit, so that a color of one individual, colors of a plurality of individuals of different types, or colors of a plurality of individuals of a same type in the image can be retained subsequently. An individual is used as a selection unit, and color retention setting is performed from a dimension of a single individual, so that a subject whose color is to be retained can be selected more accurately, and flexibility of color retention setting can be improved.

For example, the video recording scenario is a group dance performance, the target object may be a leader dance, and the mobile phone may retain a color of a region in which the leader dance is located. For another example, the video recording scenario is a band playing scenario, the target object may be a band leader singer, and the mobile phone may retain a color of a region in which the band leader singer is located. For another example, the video recording scenario is a concert scene, the target object is a singer, and the mobile phone may retain a color of a region in which the singer is located.

In some other technical solutions, the mobile phone may retain a color of a region in which the target object is located and a color of a region in which an object that overlaps the target object is located. For example, the target object is a singer, and the singer holds an object such as a microphone or a musical instrument. The mobile phone may retain a color of a region in which the singer is located, and retain a color of the object such as the microphone or the musical instrument held by the singer.

An example in which the target processing mode is the graying mode by default after the mobile phone enters the color retention mode is used for description. In some embodiments, after the mobile phone enters the color retention mode, when the image obtained by the camera includes a character, the mobile phone considers, by default, that on the shooting preview interface, the target object in the preview image is the character, an image color in the target region in which the target object is located is retained, and an image in the background region is a grayscale image. The mobile phone may delete or add one or more individuals from or to the target object based on an indication operation of the user.

It should be noted that, to help distinguish between a color-retained region (also referred to as a color retention region) and a non-color-retained region in an image, a part filled with left slashes indicates a color-retained region in an image displayed by the mobile phone shown in the accompanying drawings.

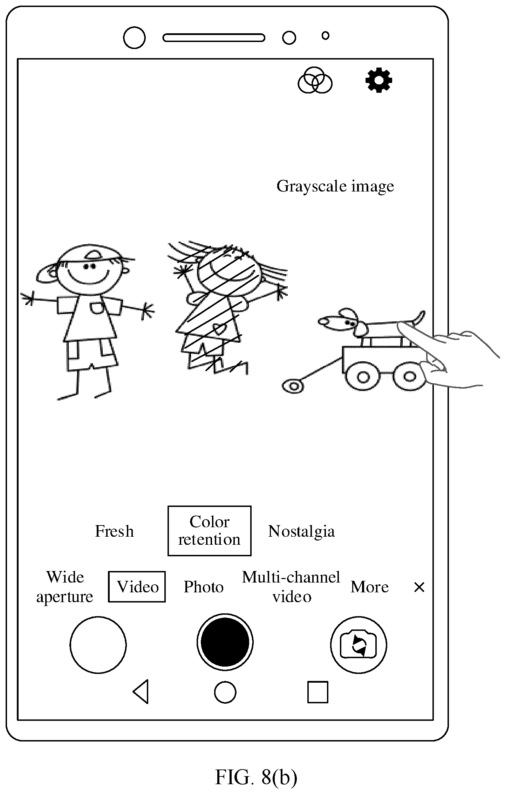

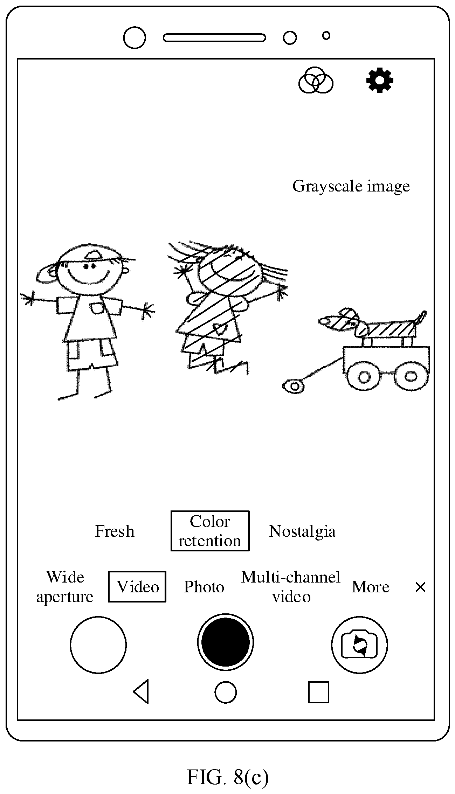

For example, the mobile phone may prompt, by using a sound or by displaying prompt information, the user to specify the target object. For example, for a shooting preview interface displayed by the mobile phone after the mobile phone enters the color retention mode, refer to FIG. 8(a). As shown in FIG. 8(a), the mobile phone may prompt the user to tap an individual in an image, to delete or add an object whose color is to be retained. As shown in FIG. 8(a), after the mobile phone detects an operation of tapping a character 1 by the user, the mobile phone deletes the character 1 from the target object, and the target object includes a character 2. As shown in FIG. 8(b), a region in which the character 1 is located changes to a grayscale image, and the mobile phone retains a color of a region in which the character 2 is located. Then, as shown in FIG. 8(b), after the mobile phone detects an operation of tapping a dog by the user, the mobile phone adds the dog to the target object, and the target object includes the character 2 and the dog. As shown in FIG. 8(c), an image in a region in which the dog is located changes to a color image, an image in the region in which the character 2 is still a color image, and an image in the other region is a grayscale image.

It should be noted that, in an image displayed by the mobile phone shown in the accompanying drawings such as FIG. 8(a), a text "grayscale image" displayed in a background region indicates that an image in the background region is a grayscale image.

It should be noted that, in this embodiment of this application, that an image in a region in an image is a color/grayscale image may be briefly described as that a region is a color/grayscale image, or may be briefly described as that there is a color/grayscale image in a region.

In some other embodiments, after the mobile phone enters the color retention mode, when the image obtained by the camera includes a plurality of characters, the mobile phone considers, by default, that the target object in the preview image is one or more characters closest to a middle region. The mobile phone may further add or delete one or more individuals to or from the target object based on an indication operation of the user, and perform color retention based on a modified target object.

In some other embodiments, after the mobile phone enters the color retention mode, when the image obtained by the camera includes one character, the mobile phone considers, by default, that the target object in the preview image is the character. For example, the preview image includes a character 1, and the character 1 is the target object. After the character 1 moves out of an image range of the mobile phone, the preview image does not include the target object, and all preview images are grayscale images. Subsequently, when a character 2 appears in the image obtained by the camera, the target object in the preview image is automatically set to the character 2. The character 2 and the character 1 may be the same or different. That the character 2 appears in the image means that a part or all of the character 2 appears in the image. The mobile phone may further add or delete one or more individuals to or from the target object based on an indication operation of the user, and perform color retention based on a modified target object.

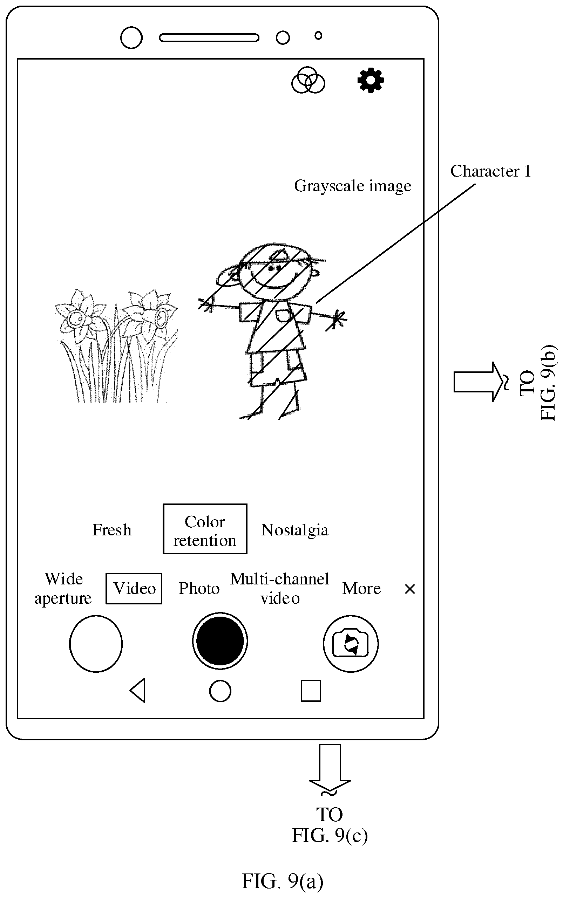

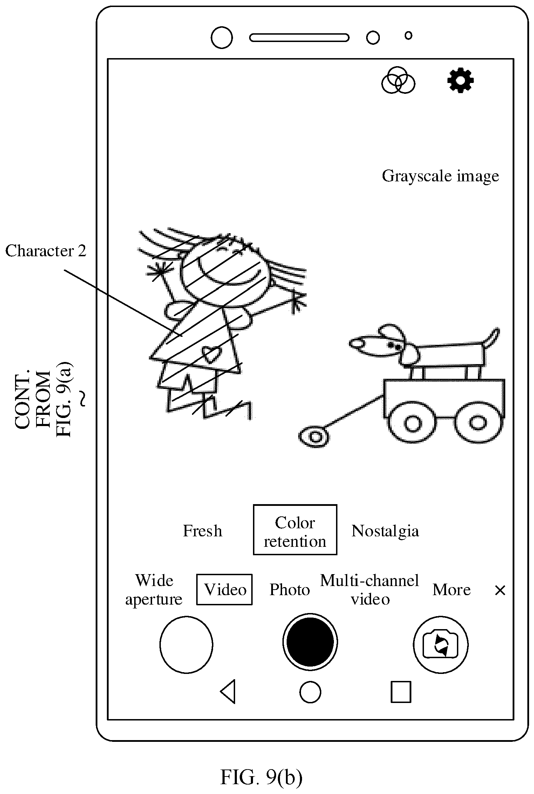

For example, as shown in FIG. 9(a), after the mobile phone enters the color retention mode, the target object is a character 1. As shown in FIG. 9(b), after the character 1 moves out of an image range of the mobile phone and the mobile phone detects that the image obtained by the camera includes a character 2, the target object is the character 2, and the mobile phone retains a color of a region in which the character 2 is located in the preview image.

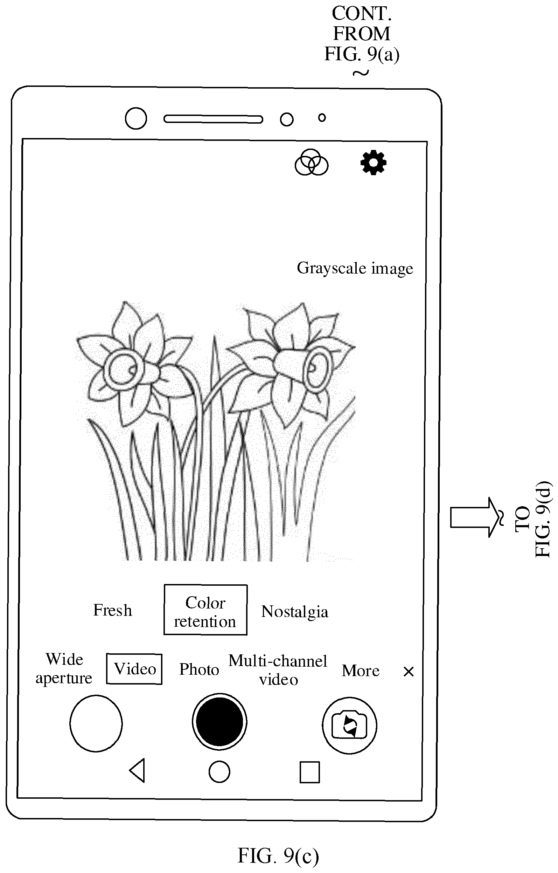

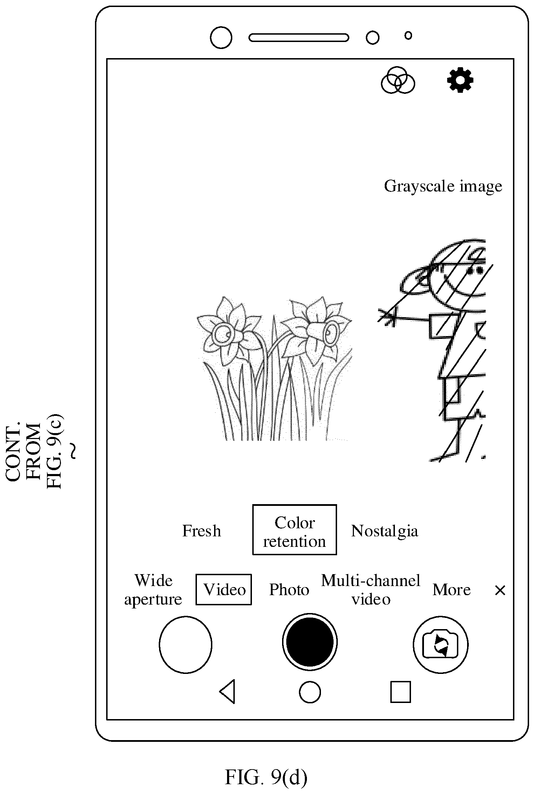

Alternatively, as shown in FIG. 9(c), after the character 1 moves out of an image range of the mobile phone, the entire preview image is a grayscale image. After the mobile phone detects the character 1 in the image obtained by the camera again, the target object in the preview image is the character 1. As shown in FIG. 9(d), the mobile phone retains a color of a region in which the character 1 is located in the preview image.

In some other embodiments, after entering the color retention mode, the mobile phone considers, by default, that the target object in the preview image is a character that first appears in the image obtained by the camera. After the target object moves out of an image range of the mobile phone, the preview image does not include the target object, and the preview image is a grayscale image. Subsequently, the mobile phone may further add or delete one or more individuals to or from the target object based on an indication operation of the user, and perform color retention based on a modified target object.

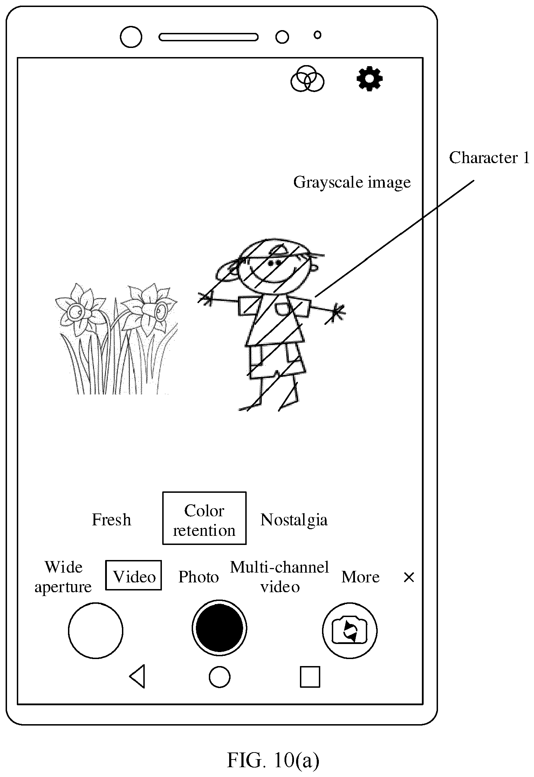

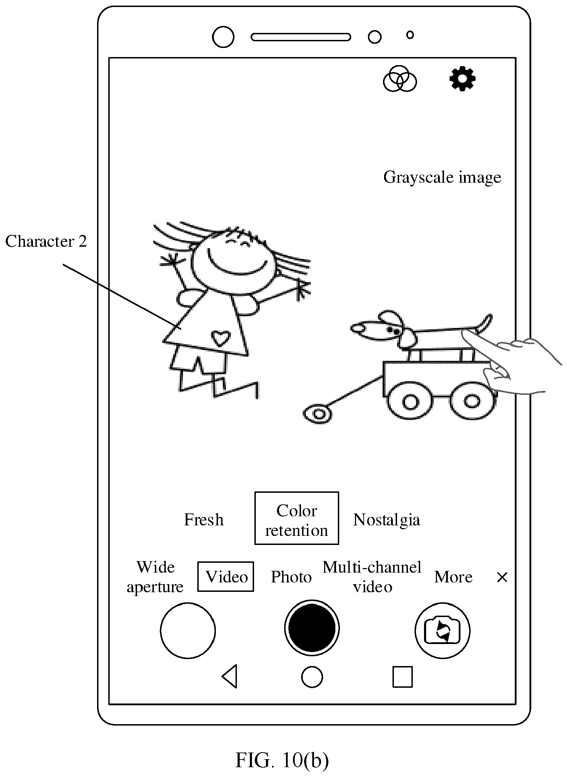

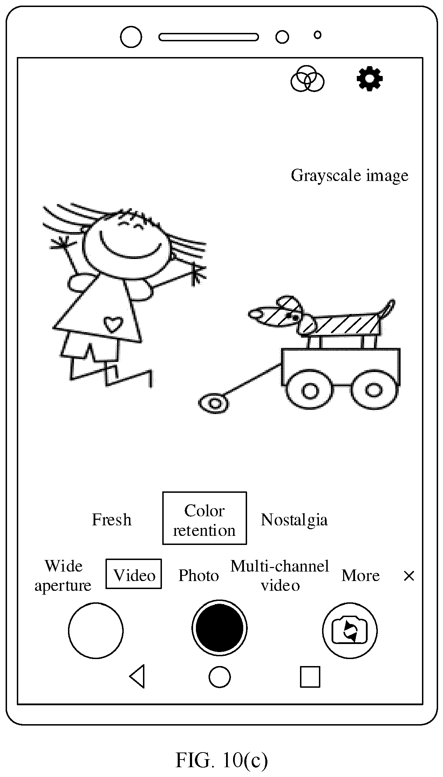

For example, as shown in FIG. 10(a), after the mobile phone enters the color retention mode, the target object is a character 1. After the character 1 moves out of an image range of the mobile phone, as shown in FIG. 10(b), the entire preview image is a grayscale image. After the mobile phone detects an operation of tapping a dog by the user, the target object is the dog. As shown in FIG. 10(c), the mobile phone retains a color of a region in which the dog is located in the preview image.

In some other embodiments, after entering the color retention mode, the mobile phone considers, by default, that the target object in the preview image is an individual in the middle of the image obtained by the camera or an individual at a location with a golden ratio. For example, the individual in the middle is a dog or a building. The mobile phone may further add or delete an individual to or from the target object based on an indication operation of the user, and perform color retention based on a modified target object.

In some other embodiments, after entering the color retention mode, the mobile phone considers, by default, that the target object in the preview image is an individual that occupies a largest area in the image obtained by the camera. The mobile phone may further add or delete one or more individuals to or from the target object based on an indication operation of the user, and perform color retention based on a modified target object.

In some other embodiments, after entering the color retention mode, the mobile phone determines the target object in a preset type sequence by default. For example, the type sequence is a character, an animal, and a building. If the image obtained by the camera includes a character, the target object in the preview image is the character. If the image obtained by the camera does not include a character but includes an animal, the target object in the preview image is the animal. If the image obtained by the camera does not include a character or an animal but includes a building, the target object in the preview image is a building. The mobile phone may further add or delete one or more individuals to or from the target object based on an indication operation of the user, and perform color retention based on a modified target object.

In some other embodiments, the target object is an object preset by the user by using a system setting interface of the mobile phone. The mobile phone may further add or delete one or more individuals to or from the target object based on an indication operation of the user, and perform color retention based on a modified target object.

In other words, after entering the color retention mode, the mobile phone may first automatically determine the target object, and then may add or delete one or more individuals to or from the target object based on an indication operation of the user, and perform color retention based on a modified target object.

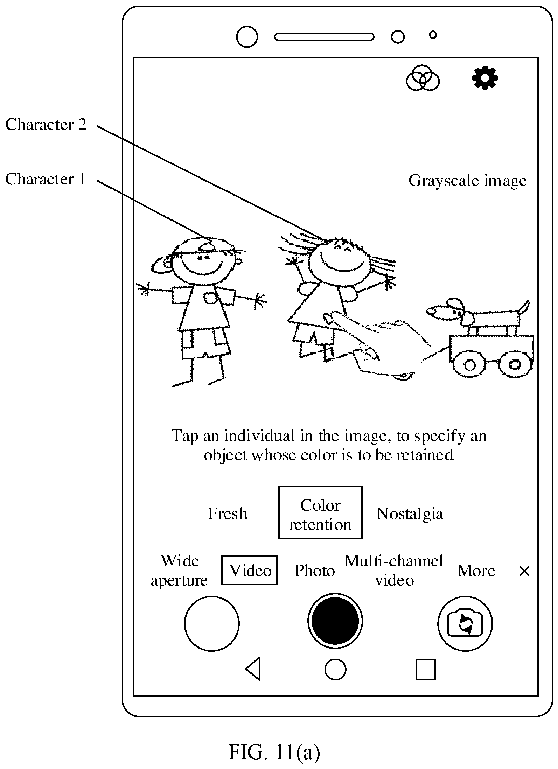

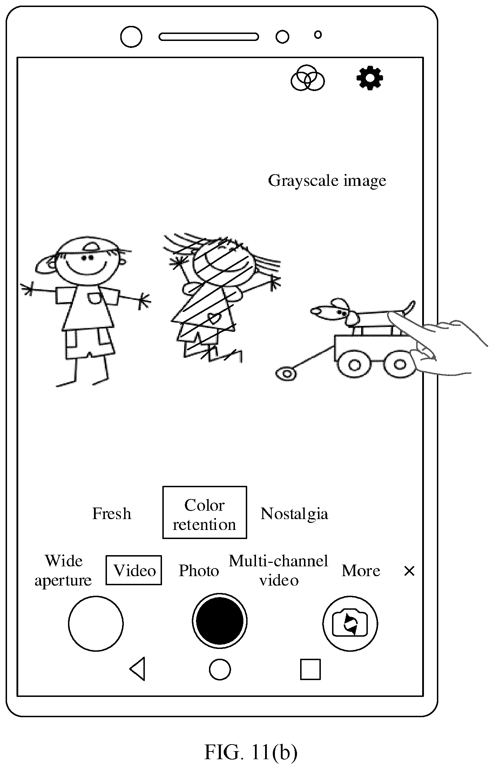

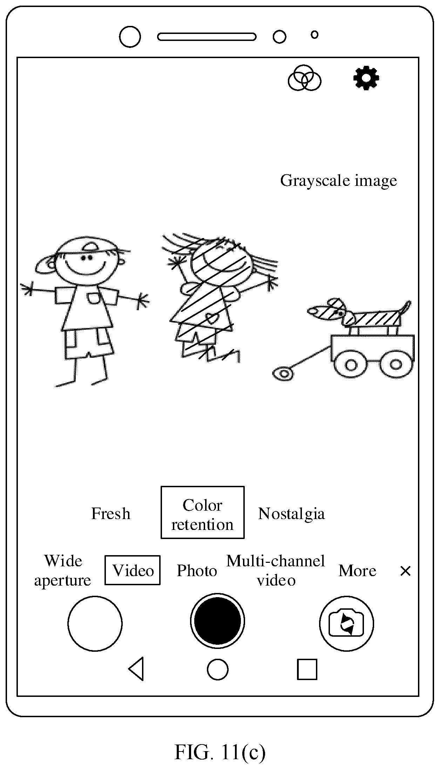

In some other embodiments, after the mobile phone enters the color retention mode, there is no default target object, and the mobile phone displays a pure color image or a pure grayscale image. The mobile phone determines one or more individuals selected by the user as the target object, retains a color of a target region in the preview image (that is, retains a color of an image in the target region), and processes an image in a background region as a grayscale image. For example, the mobile phone may prompt, by using a sound or by displaying prompt information, the user to specify the target object. For example, after entering the color retention mode, as shown in FIG. 11(a), the preview image is a grayscale image, and the mobile phone may prompt, by using text information, the user to tap an individual in the image, to specify an object whose color is to be retained. After detecting an operation of tapping a character 2 by the user, the mobile phone determines the character 2 as the target object. As shown in FIG. 11(b), the mobile phone retains a color of a region in which the character 2 is located in the shooting preview interface. After the mobile phone detects an operation of tapping a dog by the user again, as shown in FIG. 11(c), the mobile phone retains colors of regions in which the character 2 and the dog are located in the shooting preview interface.

For another example, after entering the color retention mode, the mobile phone prompts the user to select an object whose color is to be retained. After the mobile phone detects an operation of selecting a region by the user, the target object includes an individual in the region, and the mobile phone includes a color of the region in which the target object is located.

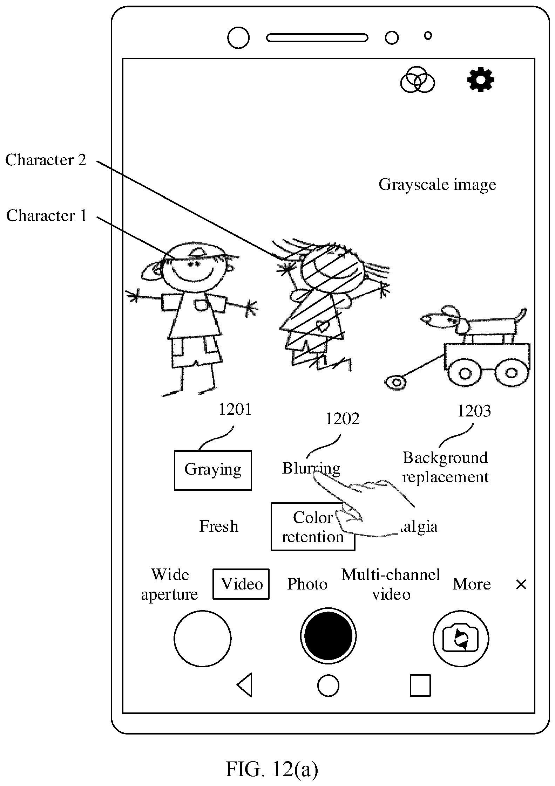

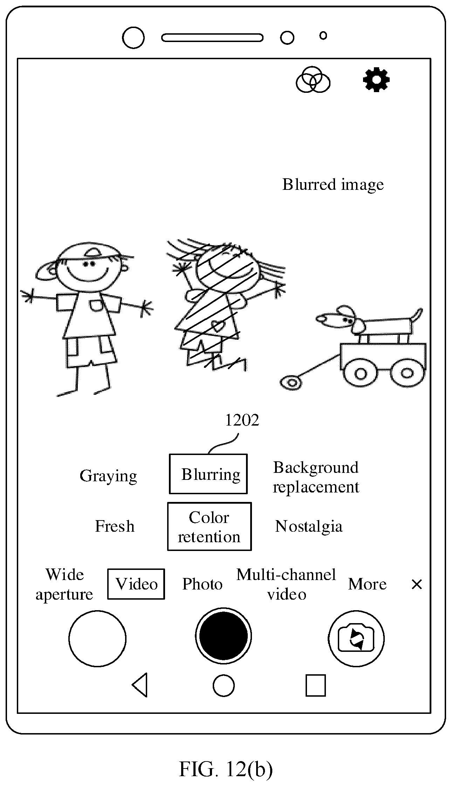

After the target object is determined, if the target processing mode changes, image effects in the target region and the background region also change correspondingly. For example, as shown in FIG. 12(a), after the mobile phone enters the color retention mode, the shooting preview interface includes a graying mode control 1201, a blurring mode control 1202, and a background replacement mode control 1203. The target processing mode is a preset graying mode, the graying mode control 1201 is selected, the target object is a character 2, a region in which the character 2 is located is in color, and a background region is a grayscale image. As shown in FIG. 12(a), after detecting an operation of selecting the blurring mode control 1202 by the user, the mobile phone switches the target processing mode to a blurring mode. As shown in FIG. 12(b), the blurring mode control 1202 is selected, the target object is a character 2, a region in which the character 2 is located is a clear color image, and a background region is a blurred image, that is, an image obtained after blurring processing is performed.

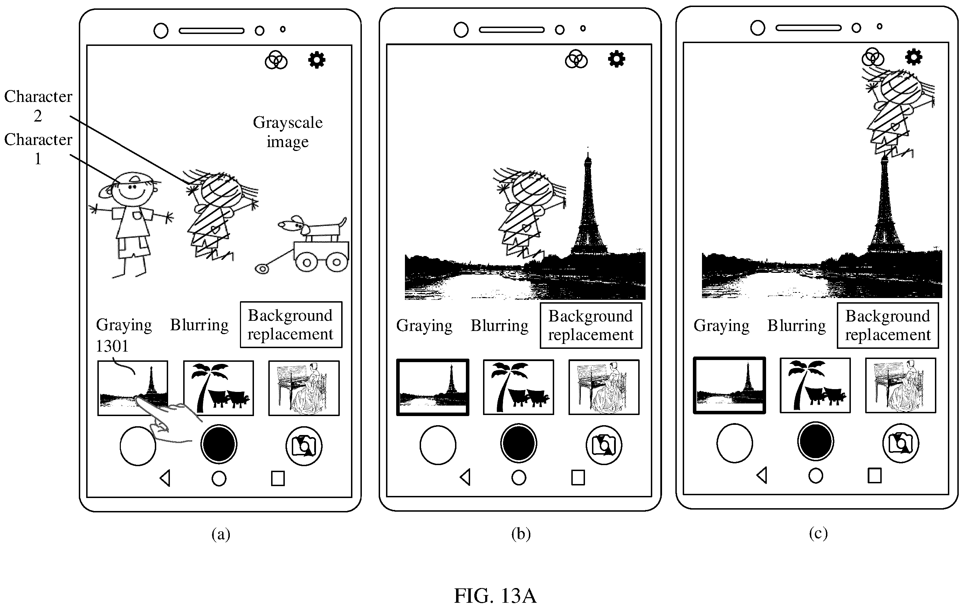

For another example, as shown in (a) in FIG. 13A, the background replacement mode control is selected, the target processing mode is a background replacement mode, and the target object is a character 2. The shooting preview interface includes at least one background image. After the mobile phone detects an operation of tapping a background image 1301 by the user, as shown in (b) in FIG. 13A, the mobile phone replaces the background region in the preview image with a region at a corresponding location in the background image 1301. It may also be understood that the mobile phone superimposes an image of the character 2 in the preview image on the background image. In addition, it can be learned from comparison between (b) and (c) in FIG. 13A that a replacement region in the target image varies with a location of the target object.

For another example, after the mobile phone enters the color retention mode, the target processing mode is a preset graying mode, and the preview image is a pure grayscale image or a pure color image. If the mobile phone switches the target processing mode to a blurring mode based on an indication operation of the user, in some embodiments, the preview image is a clear pure color image. In some other embodiments, a middle region of the preview image is a clear color image, and the other region is a blurred image. After detecting an operation of indicating the target object by the user, the mobile phone retains a region in which the target object is located to a clear color image, and sets a background region to a blurred image.

For another example, after the mobile phone enters the color retention mode, the target processing mode is a preset graying mode, and the preview image is a pure grayscale image or a pure color image. If the mobile phone switches the target processing mode from the graying mode to a background replacement mode based on an indication operation of the user, the preview image is a pure color image. After detecting an operation of indicating the target object by the user, the mobile phone retains a color image of a region in which the target object is located, and replaces a background region with a background image.

After determining the target object and the target processing mode, the mobile phone processes, based on the target object and the target processing mode, the original image obtained by the camera and the ISP. Therefore, in the preview image displayed on the shooting preview interface, a color of the target region is retained (that is, a color of an image in the target region is retained), and an image in the background region is an image obtained after processing is performed according to the target processing mode.

In the solution described in the foregoing embodiment, after entering the color retention mode, the mobile phone displays the preview image on the shooting preview interface, and the mobile phone enters the color retention mode to trigger the mobile phone to perform instance segmentation on each image subsequently obtained by the camera. The mobile phone performs color retention processing based on an instance segmentation result, and displays, on the shooting preview interface, a preview image obtained after the color retention processing.

In some technical solutions, after detecting an operation performed by the user on the target object, the mobile phone performs color retention processing on a current frame of image, so that the user can see, on the preview image as soon as possible, a color retention effect obtained in response to the operation of the user, and an instant response can be provided for the user.

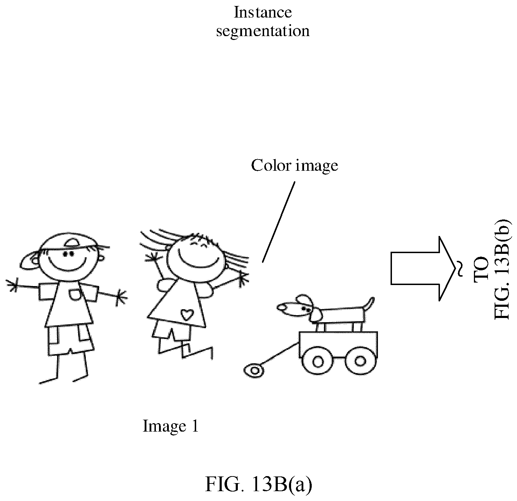

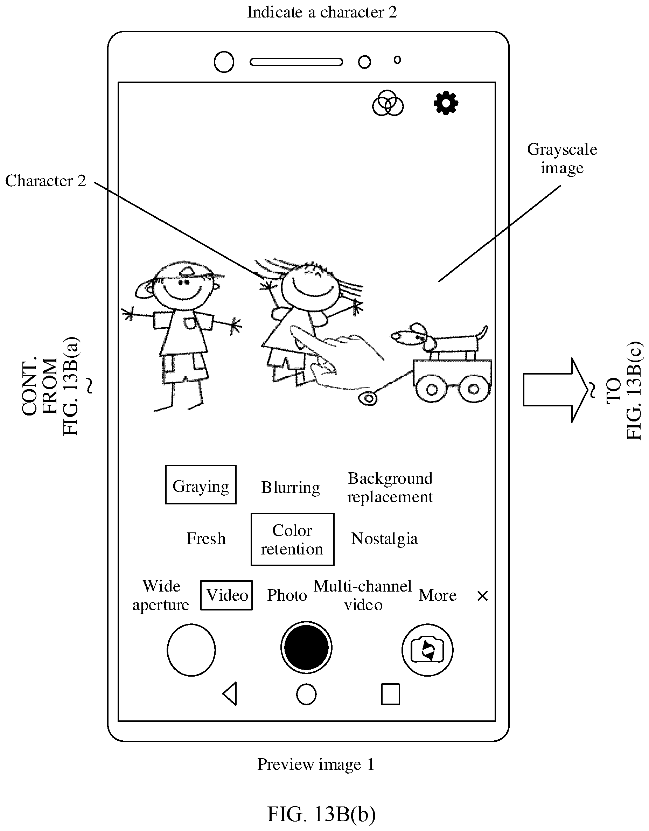

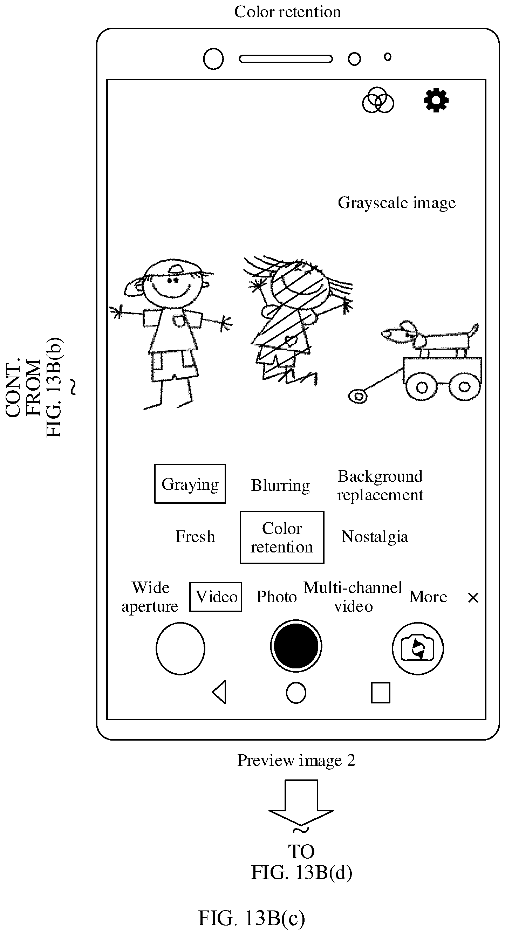

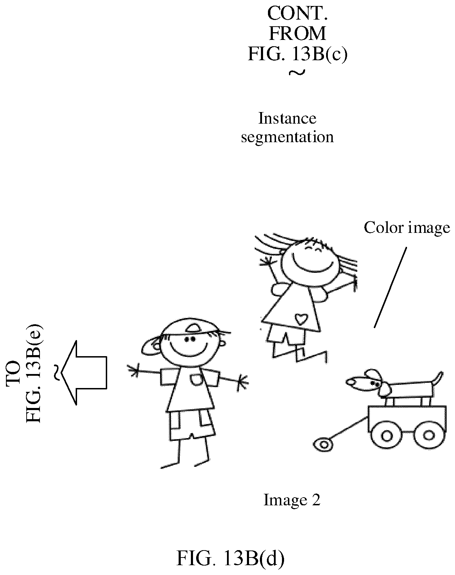

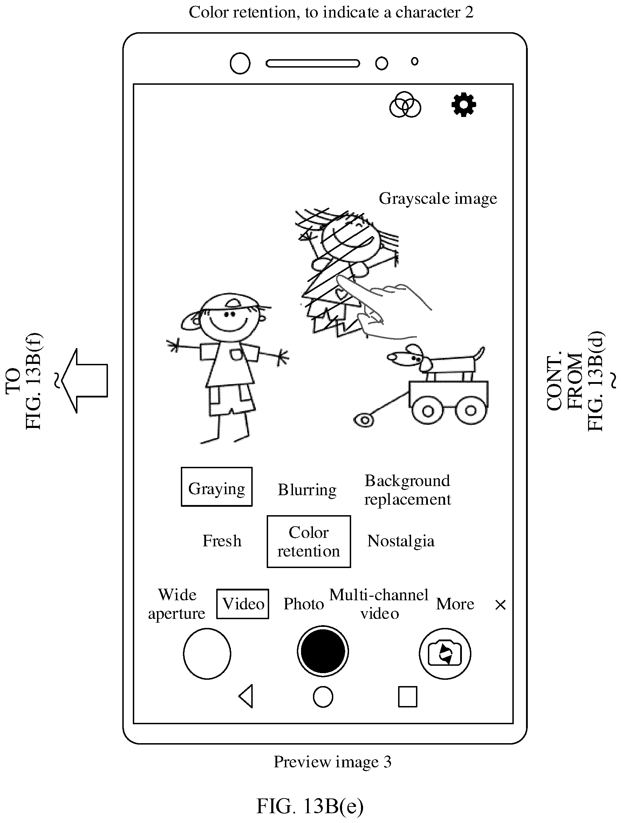

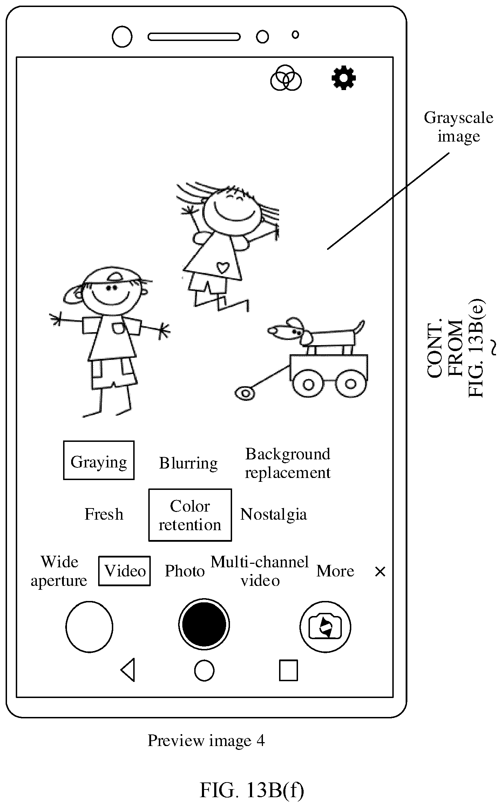

For example, the mobile phone performs color retention processing on the image obtained by the camera. For example, the target processing mode is the graying mode. For an image 1 obtained by the camera, refer to FIG. 13B(a). The image 1 is a color image. The mobile phone performs instance segmentation on the image 1, and determines a mask region in which each individual object is located in the image 1. As shown in FIG. 13B(b), the mobile phone displays a preview image 1 on the shooting preview interface, and the preview image 1 is a pure grayscale image obtained by processing the image 1. As shown in FIG. 13B(b), if the mobile phone detects an operation of tapping a character 2 by the user, the mobile phone determines that the target object is the character 2, and determines a mask region corresponding to the character 2. The mobile phone retains a color in the mask region of the character 2 in the image 1, and processes the other region as a grayscale image, to generate and display a preview image 2 on which color retention processing is performed and that is shown in FIG. 13B(c). Then, as shown in FIG. 13B(d), the camera obtains an image 2, and the mobile phone performs instance segmentation on the image 2, and determines a mask region in which the target object, that is, a character 2 is located. The mobile phone retains a color in the mask region of the character 2 in the image 2, and processes the other region as a grayscale image, to generate and display a preview image 3 shown in FIG. 13B(e). Then, as shown in FIG. 13B(e), if the mobile phone detects an operation of tapping a character 2 by the user, the character 2 is removed from the target object. In this case, the target object does not include any individual object. The mobile phone processes the image 2 as a pure grayscale image, to generate and display a preview image 4 shown in FIG. 13B(f).

For another example, the mobile phone performs color retention processing on the preview image. For example, the target processing mode is the graying mode. The camera obtains an image 1, and the image 1 is a color image. The mobile phone performs instance segmentation on the image 1, and determines a mask region in which each individual object is located in the image 1. The mobile phone displays a preview image 1 on the shooting preview interface, and the preview image 1 is a pure grayscale image obtained by processing the image 1. If the mobile phone detects an operation of tapping a character 2 by the user, the mobile phone determines that the target object is the character 2, and determines a mask region corresponding to the character 2. The mobile phone restores the mask region of the character 2 in the preview image 1 to a color image, and the other region is still a grayscale image, to generate and display a preview image 2 obtained after the color retention processing.

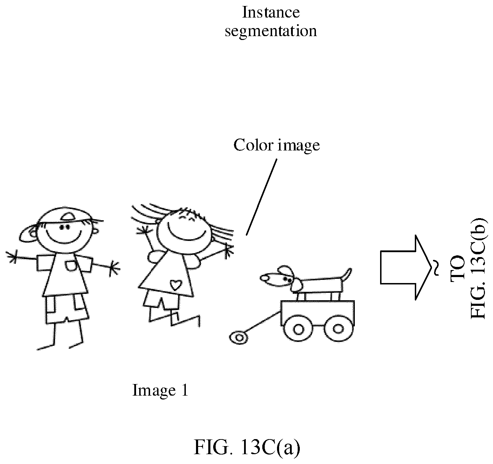

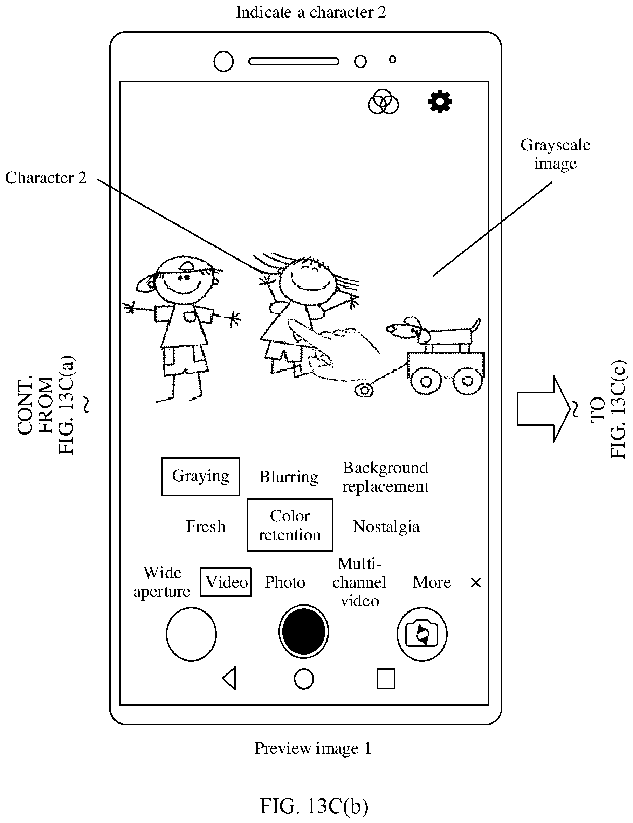

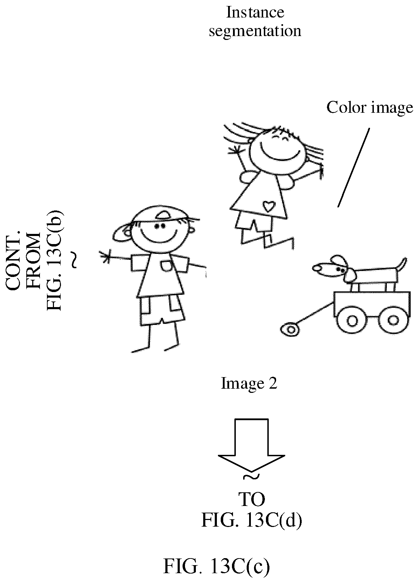

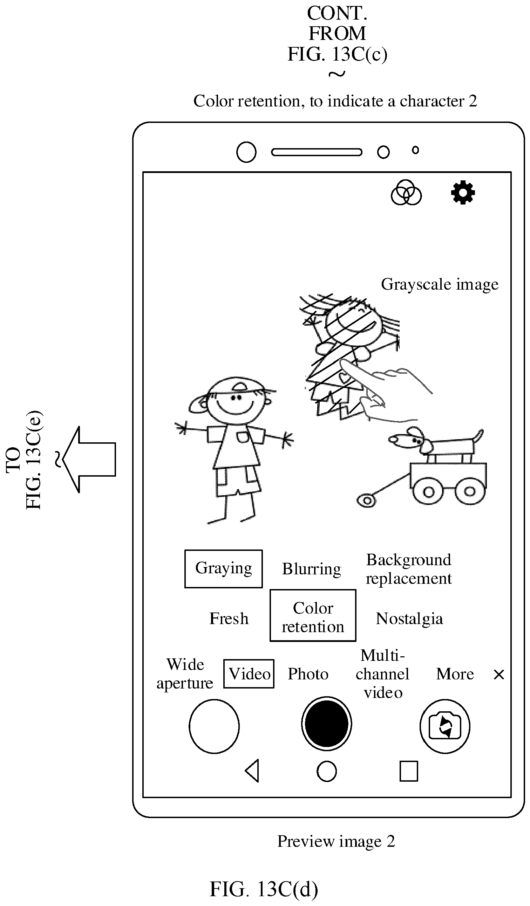

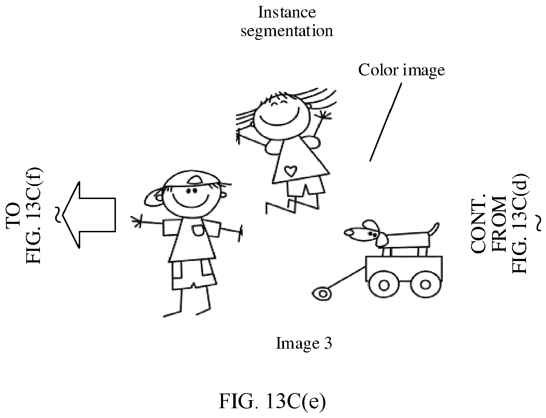

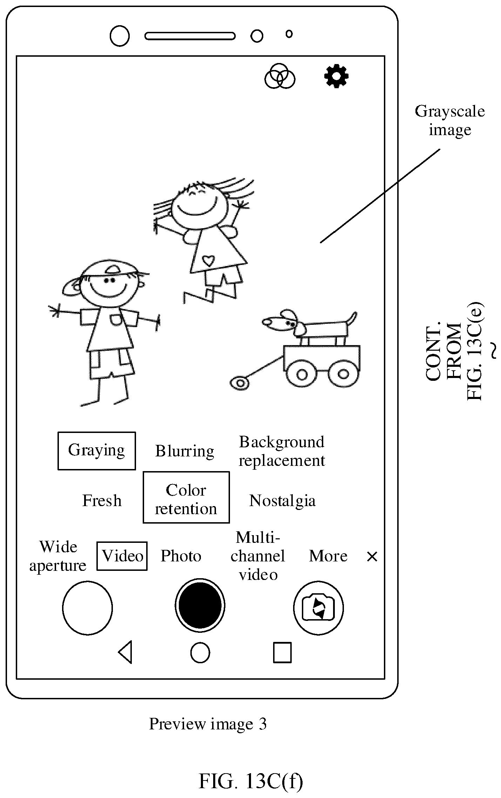

In some technical solutions, after detecting an operation performed by the user on the target object, the mobile phone performs color retention processing on a next frame of image. For example, the target processing mode is the graying mode. For an image 1 obtained by the camera, refer to FIG. 13C(a). The image 1 is a color image. The mobile phone performs instance segmentation on the image 1, and determines a mask region in which each individual object is located in the image 1. As shown in FIG. 13C(b), the mobile phone displays a preview image 1 on the shooting preview interface, and the preview image 1 is a pure grayscale image obtained by processing the image 1. If the mobile phone detects an operation of tapping a character 2 by the user, the mobile phone determines that the target object is the character 2. Then, as shown in FIG. 13C(c), the camera obtains an image 2, and the mobile phone performs instance segmentation on the image 2, and determines a mask region in which the target object, that is, a character 2 is located. The mobile phone retains a color in the mask region of the character 2 in the image 2, and processes the other region as a grayscale image, to generate and display a preview image 2 shown in FIG. 13C(d). Then, if the mobile phone detects an operation of tapping the character 2 by the user, the character 2 is removed from the target object. In this case, the target object does not include any individual object. Then, as shown in FIG. 13C(e), the camera obtains an image 3, and the mobile phone performs instance segmentation on the image 3, and processes the image 3 as a pure grayscale image, to generate and display a preview image 3 shown in FIG. 13C(f).

In some other embodiments, after entering the color retention mode, the mobile phone displays the preview image on the shooting preview interface. When the mobile phone enters the color retention mode, the mobile phone is not triggered to perform instance segmentation. Only after the mobile phone enters the color retention mode and detects an operation of indicating the target object by the user, the mobile phone is triggered to perform instance segmentation on an image subsequently obtained by the camera. Similar to the foregoing embodiment, the mobile phone may perform color retention processing on a current frame of image or process a next frame of image based on an instance segmentation result, and display, on the shooting preview interface, a preview image obtained after the color retention processing. Similar to the foregoing embodiment, the mobile phone may perform, based on an instance segmentation result, color retention processing on the image obtained by the camera, or perform color retention processing on the preview image.

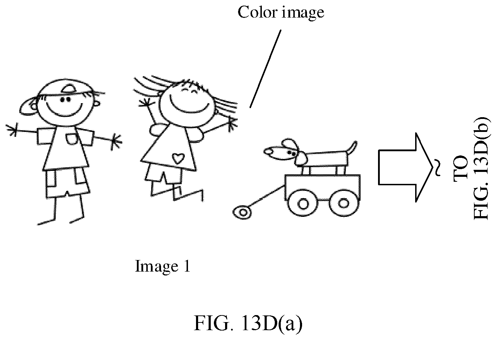

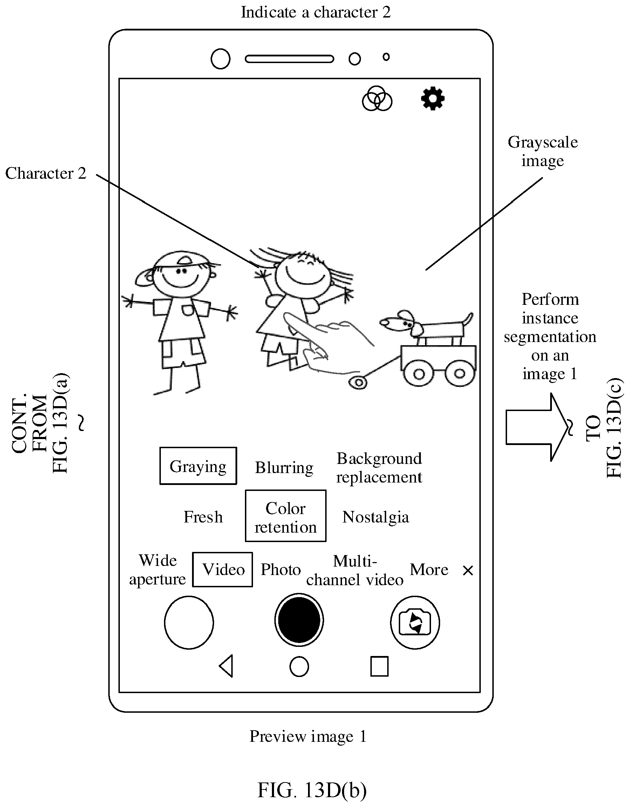

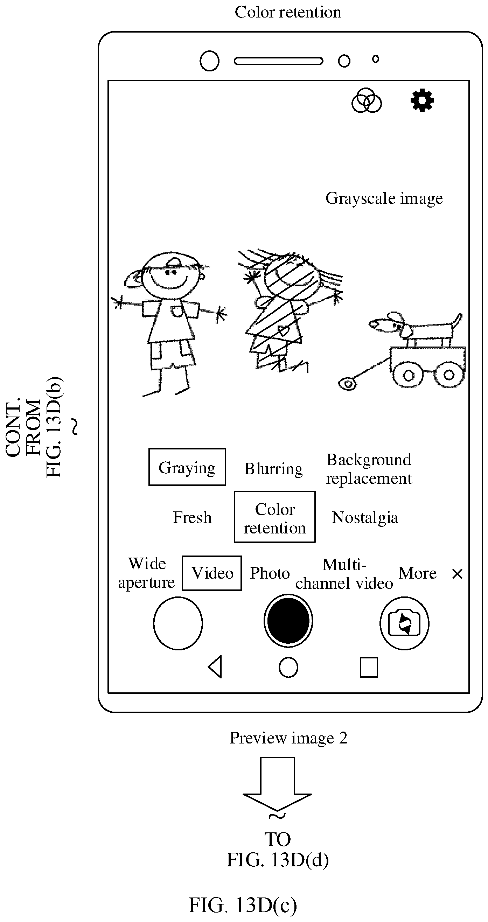

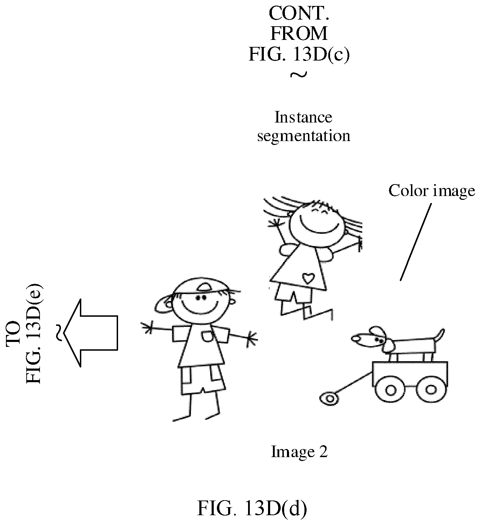

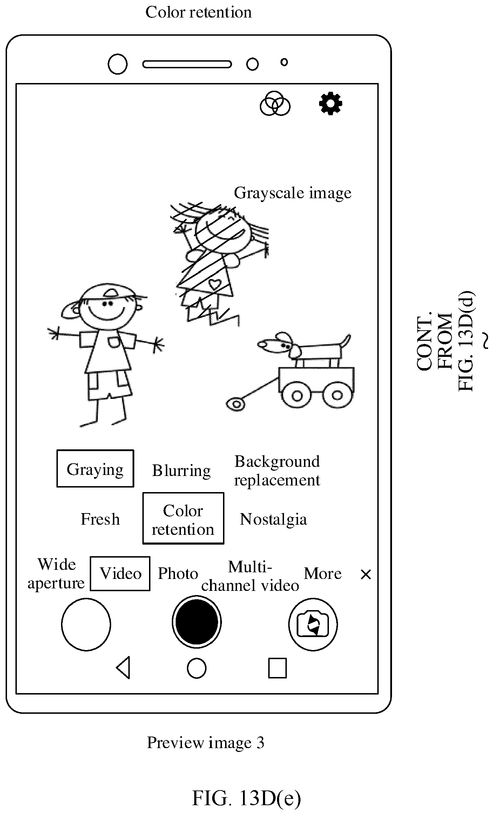

An example in which the mobile phone performs color retention processing on the current frame of image based on the instance segmentation result, and performs color retention processing on the image obtained by the camera is used for description. For example, the target processing mode is the graying mode. For an image 1 obtained by the camera, refer to FIG. 13D(a). The image 1 is a color image. As shown in FIG. 13D(b), the mobile phone displays a preview image 1 on the shooting preview interface, and the preview image 1 is a pure grayscale image obtained by processing the image 1. If the mobile phone detects a tapping operation of the user on the preview image, the mobile phone performs instance segmentation on the image 1, determines that a region in which a tapping location is located is a mask region of a character 2, and determines that the target object includes the character 2. The mobile phone retains a color in the mask region of the character 2 in the image 1, and processes the other region as a grayscale image, to generate and display a preview image 2 on which color retention processing is performed and that is shown in FIG. 13D(c). Then, as shown in FIG. 13D(d), the camera obtains an image 2, and the mobile phone performs instance segmentation on the image 2, and determines a mask region in which the target object, that is, a character 2 is located. The mobile phone retains a color in the mask region of the character 2 in the image 2, and processes the other region as a grayscale image, to generate and display a preview image 3 shown in FIG. 13D(e).

In some other embodiments, the mobile phone does not need to enter the graying mode, the blurring mode, or the background replacement mode after the color retention mode, but the mobile phone may directly enter the graying mode, the blurring mode, or the background replacement mode. In this embodiment, after step 302, the mobile phone may not perform step 303. Although not shown in the accompanying drawings, the method may further include step 304 and step 300.

300: After detecting a preset operation 2 of the user, the mobile phone enters a target processing mode, determines a target object, retains a color of a region in which the target object is located in the preview image, and processes a background region according to the target processing mode, where the target processing mode includes a graying mode, a blurring mode, and a background replacement mode.

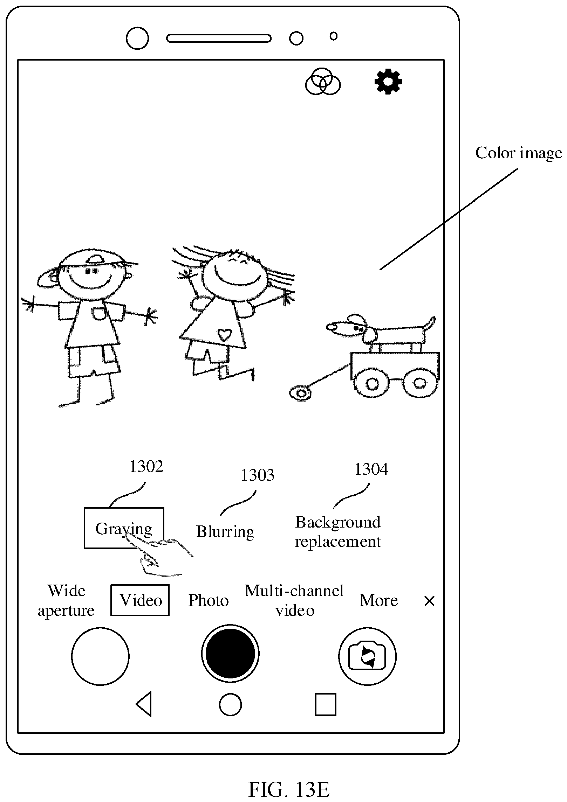

For example, as shown in FIG. 13E, after the mobile phone enters the video recording mode in step 302, the shooting preview interface displayed by the mobile phone includes a graying mode control 1302, a blurring mode control 1303, and a background replacement mode control 1304. After detecting an operation of tapping the graying mode control 1302 by the user, the mobile phone enters a graying mode.

After step 302, if the mobile phone enters the graying mode in step 300, the mobile phone may determine the target object, retain the color of the region in which the target object is located, and set the background region to a grayscale image. In addition, the mobile phone may further modify the target object based on an indication operation of the user. The target object includes one or more individuals, and the plurality of individuals belong to a same type or different types. For a manner of determining and modifying the target object by the mobile phone, refer to related descriptions in step 305.

For example, after the mobile phone enters the graying mode, the preview image is a pure grayscale image or a pure color image. After detecting an operation of indicating the target object in the preview image by the user, the mobile phone retains the color of the region in which the target object is located, and sets the background region to a grayscale image.

For another example, after the mobile phone enters the graying mode, if the image obtained by the camera includes a character, the mobile phone considers, by default, that the character in the preview image is the target object, a region in which the character is located is a color image, and the other region is a grayscale image.

After entering the graying mode, the mobile phone may further switch to the blurring mode or the background replacement mode based on an indication operation of the user. In the graying mode, if the preview image includes the target object, after the mobile phone switches to the blurring mode, a region in which the target object is located is a clear color image, and the other region is a grayscale image. Alternatively, after the mobile phone switches to the background replacement mode, a color image of a region in which the target object is located in the preview image displayed by the mobile phone is retained, and the other region is replaced with an image in a region at a same location in a background image. In the graying mode, if the preview image does not include the target object, and the preview image is a pure grayscale image or a pure color image, the preview image displayed by the mobile phone is a pure color image after the mobile phone switches to the blurring mode or the background replacement mode.

After step 302, if the mobile phone enters the blurring mode in step 300, the mobile phone may determine the target object, retain the clear color image of the region in which the target object is located, and set the background region to a blurred image. For example, after detecting an operation of tapping the blurring mode control 1303 by the user, the mobile phone enters the blurring mode. In addition, the mobile phone may further modify the target object based on an indication operation of the user. For a manner of determining and modifying the target object by the mobile phone, refer to related descriptions in step 305.

For example, after the mobile phone enters the blurring mode, the preview image is a pure grayscale image or a pure color image, or a middle region is a clear color image and the other region is a blurring image. After detecting an operation of indicating the target object in the preview image by the user, the mobile phone retains the color of the region in which the target object is located, and processes the background region as a blurred image.

For another example, after the mobile phone enters the blurring mode, if the image obtained by the camera includes a character, the mobile phone considers, by default, that a character closest to the middle of the preview image is the target object, a region in which the target object is located is a clear color image, and the other region is a blurred image.

After entering the blurring mode, the mobile phone may further switch to the graying mode or the background replacement mode based on an indication operation of the user. In the blurring mode, if the preview image includes the target object, after the mobile phone switches to the graying mode, a region in which the target object is located in the preview image displayed by the mobile phone is a color image, and the other region is a grayscale image. Alternatively, after the mobile phone switches to the background replacement mode, a color image of a region in which the target object is located is retained, and the other region is replaced with an image in a region at a same location in a background image. In the blurring mode, if the preview image does not include the target object, and the preview image is a pure grayscale image or a pure color image, or a middle region of the preview image is a clear color image and the other region is a blurred image, after the mobile phone switches to the graying mode, the preview image displayed by the mobile phone is a pure grayscale image or a pure color image. Alternatively, after the mobile phone switches to the background replacement mode, the preview image displayed by the mobile phone is a pure color image.

After step 302, if the mobile phone enters the background replacement mode in step 300, the mobile phone may determine the target object, retain the color of the region in which the target object is located, and set the background region to a grayscale image. For example, after detecting an operation of tapping the background replacement mode control 1304 by the user, the mobile phone enters the background replacement mode. In addition, the mobile phone may further switch the target object based on an indication operation of the user. For descriptions of determining and switching the target object by the mobile phone, refer to related descriptions in step 305.

For example, after the mobile phone enters the background replacement mode, the preview image is a pure color image. After detecting an operation of indicating the target object by the user in the preview image, the mobile phone retains a color image of a region in which the target object is located, and replaces a background region with an image in a region at a same location in a background image.

For another example, after the mobile phone enters the background replacement mode, if the image obtained by the camera includes a character, the mobile phone considers, by default, that a character closest to the middle of the preview image is the target object, a color image of a region in which the target object is located is retained, and the other region is replaced with an image in a region at a same location in a background image.

After entering the background replacement mode, the mobile phone may further switch to the graying mode or the blurring mode based on an indication operation of the user. In the background replacement mode, if the preview image includes the target object, after the mobile phone switches to the graying mode, a region in which the target object is located is a color image, and the other region is a grayscale image. Alternatively, after the mobile phone switches to the blurring mode, a region in which the target object is located is a clear color image, and the other region is replaced with a blurred image. In the background replacement mode, if the preview image does not include the target object and is a pure color image, after the mobile phone switches to the graying mode, the preview image displayed by the mobile phone is a pure grayscale image or a pure color image. Alternatively, after the mobile phone switches to the blurring mode, the preview image displayed by the mobile phone is a pure grayscale image or a pure color image, or a middle region of the preview image is a clear color image and the other region is a blurred image.

306: After detecting a shooting operation of the user, the mobile phone displays a shooting interface, where the shooting interface includes a recorded image, a color of a target region in the recorded image is retained, and an image in a background region is an image obtained after processing is performed according to the target processing mode.

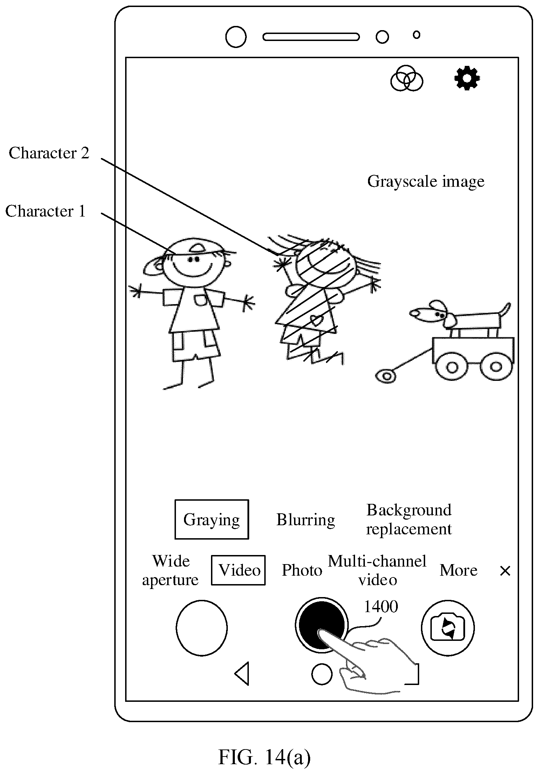

The shooting operation is a video recording operation. For example, the shooting operation of the user may be an operation of tapping a shooting control 1400 shown in FIG. 14(a) by the user, or a voice indication operation or a gesture operation of the user. This is not limited in this embodiment of this application.

After detecting the shooting operation of the user, the mobile phone starts video recording, retains a color of a target region in an image captured during video recording, that is, retains a pixel value of a pixel in the target region, and performs post-processing on a background region according to the target processing mode.

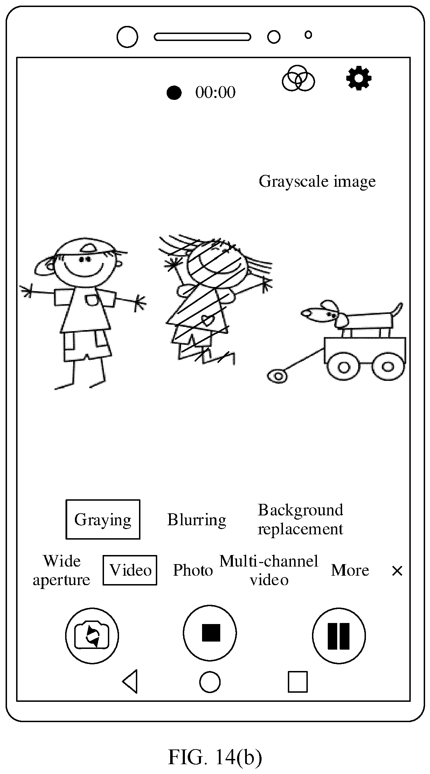

For example, if the target processing mode is the graying mode, the mobile phone may perform graying processing on the background region, to convert a pixel value in the background region into a grayscale value, and convert an image in the background region into a grayscale image. For example, if the target object shown in FIG. 14(a) is a character 2 and the target processing mode is the graying mode, after shooting starts, for a recorded image on the shooting interface, refer to FIG. 14(b).

It can be learned from FIG. 14(b) that a color of a region in which the character 2 serving as the target object is located is retained, and a background region is a grayscale image, to highlight the target object, so that the target region is in sharp contrast to the background region, and the color of the target object is bright. In this way, a subject and a shining subject can be highlighted, visual impact can be exerted on the user, and shooting experience of the user can be improved.

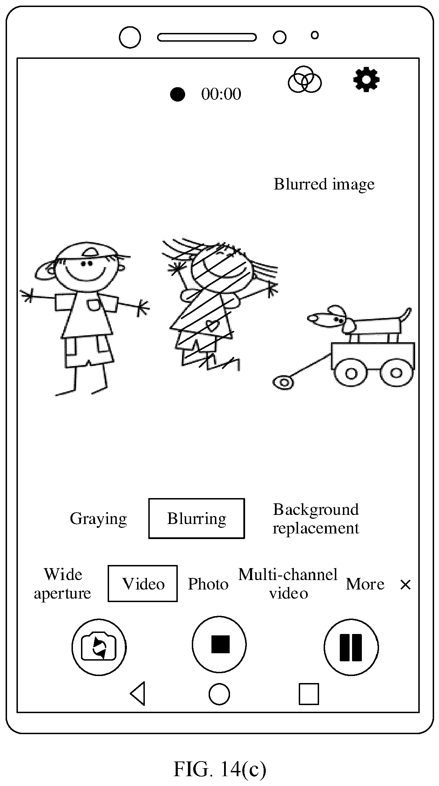

If the target processing mode is the blurring mode, the mobile phone may perform blurring processing on the background region. For example, if the target object shown in FIG. 14(a) is a character 2, after shooting starts, for a recorded image on the shooting interface, refer to FIG. 14(c). A color of a region in which the character 2 serving as the target object is located is retained and may be clearly displayed, and a background region is fuzzy and blurred, to highlight the target object, so that the target region is in intuitive contrast to the background region, and the target object is clear and gorgeous. In this way, a subject and a shining spotlight can be highlighted, visual impact can be exerted on the user, and shooting experience of the user can be improved.

It should be noted that, in an image displayed by the mobile phone shown in the accompanying drawings such as FIG. 14(c), a text "blurred image" displayed in a background region indicates that an image in the background region is a blurred image.

If the target processing mode is the background replacement mode, and the user specifies a background image in a preview mode, the mobile phone may replace an image in a background region with an image in a region at a same location in the background image, to implement an effect of replacing a background in which the target object is located. In addition, the mobile phone may further perform processing such as smoothing or feathering on a location of splicing between a target region and a background image in an image obtained through background replacement, so that a splicing edge transition is smooth and natural, and a better fusion effect is obtained.

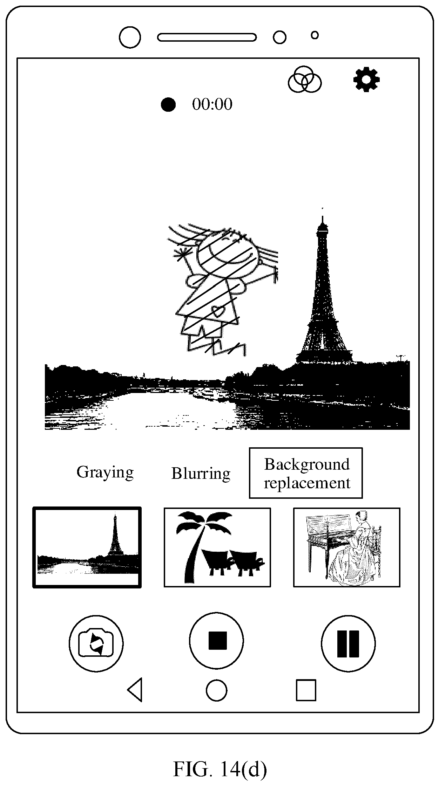

For example, if the target object shown in FIG. 14(a) is a character 2, after shooting starts, for a recorded image on the shooting interface, refer to FIG. 14(d). It can be learned from FIG. 14(d) that a color of a region in which the character 2 serving as the target object is located is retained, and a background region is replaced with another image, so that the image can be more personalized and creative, and shooting experience of the user can be improved.

In some embodiments, during shooting, the mobile phone may further adjust the target object and the target processing mode based on an indication operation of the user. As shown in FIG. 3, the color retention method provided in this embodiment of this application may further include step 307:

307: During shooting, after detecting an operation of adjusting the target object by the user, the mobile phone performs color retention on the target region based on an adjusted target object.

During shooting, the mobile phone may adjust the target object based on an indication operation of the user by using an individual as a unit, so that an object whose color is to be retained can be flexibly switched and accurately set. This improves shooting experience of the user.

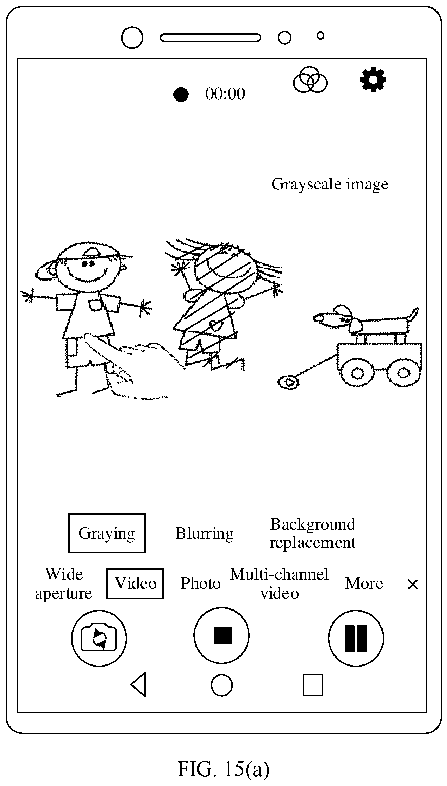

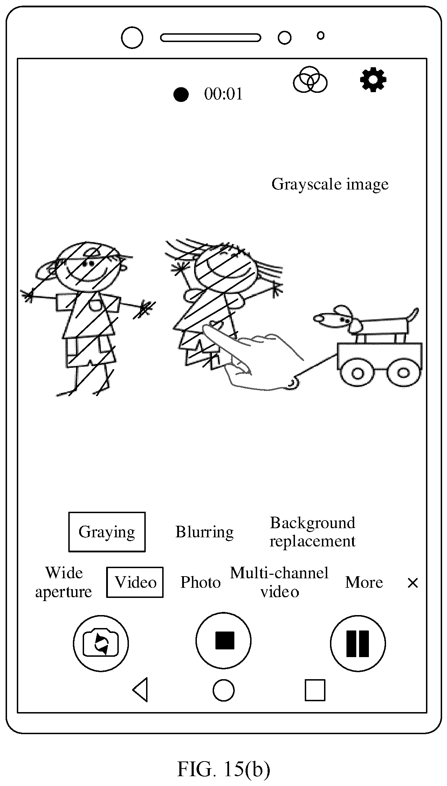

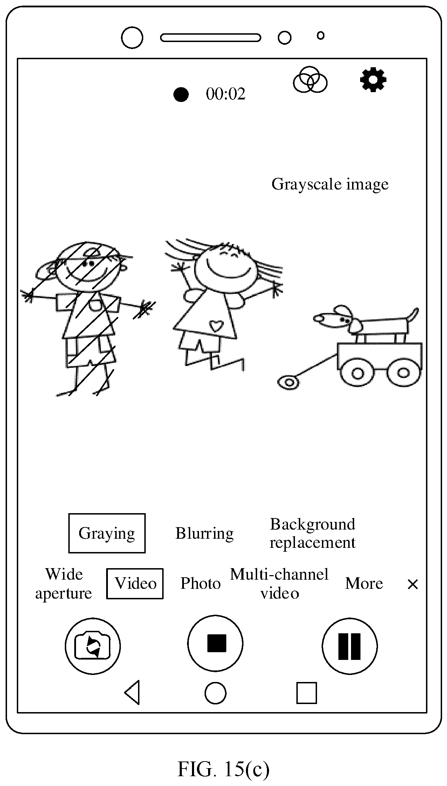

For example, as shown in FIG. 15(a), after detecting an operation of tapping a character 1 by the user, the mobile phone adds the character 1 to the target object. As shown in FIG. 15(b), colors of regions in which the character 1 and a character 2 are located are retained. After detecting an operation of tapping the character 2 by the user, the mobile phone deletes the character 2 from the target object. As shown in FIG. 15(c), the mobile phone retains the color of the region in which the character 1 is located.

For another example, after detecting a preset operation 3 of the user, the mobile phone enters a target object modification mode. Then, the mobile phone may adjust the target object based on an indication operation of the user. For example, the shooting interface may include an object adjustment control, and the preset operation 3 may be an operation of tapping the object adjustment control by the user.

308: During shooting, after detecting an operation of adjusting the target processing mode by the user, the mobile phone performs post-processing on the background region according to an adjusted target processing mode.

During shooting, the mobile phone adjusts the target processing mode based on an indication operation of the user, to flexibly adjust the processing mode, and improve video image effect diversity.

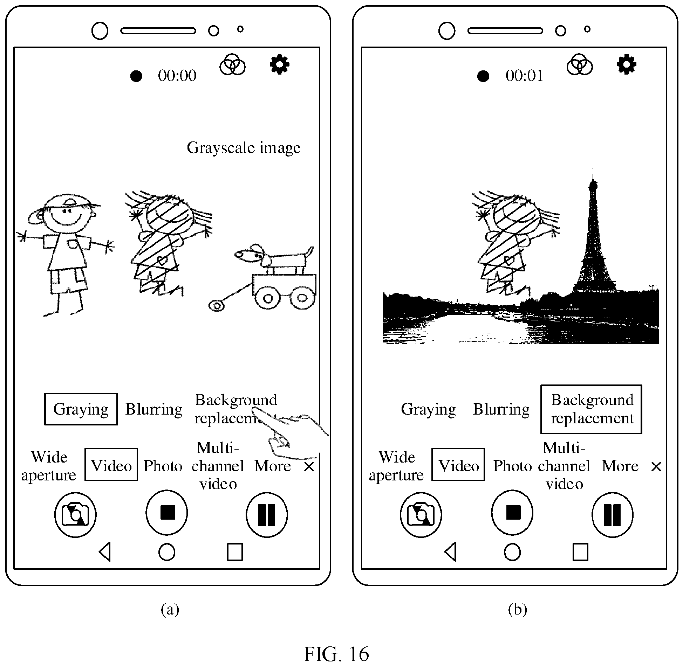

For example, the shooting interface includes a processing mode control. As shown in a shooting interface shown in (a) in FIG. 16, when the target processing mode is the graying mode, if the mobile phone detects an operation of tapping a background replacement mode control in a processing mode control by the user, the target processing mode is switched to a background replacement mode. For the shooting interface displayed by the mobile phone, refer to (b) in FIG. 16.

In some embodiments of this application, during video recording, after the target object moves out of an image range of the mobile phone, the shooting interface does not include the target object. In this case, if the target processing mode is the graying mode, the mobile phone displays a pure grayscale image on the shooting interface. If the target processing mode is the blurring mode, the mobile phone displays a pure blurred image on the shooting interface. If the target processing mode is the blurring mode, the mobile phone displays a background image on the shooting interface. Subsequently, in some technical solutions, after detecting that a target object appears again, the mobile phone continues to retain a color of a target region in which the target object is located. Alternatively, in some other technical solutions, after detecting an operation of re-specifying a target object by the user, the mobile phone retains a color of a target region in which the target object is located.

In some other embodiments of this application, during video recording, the mobile phone may further exit and enter the color retention mode for a plurality of times. In the color retention mode, the recorded image on the shooting interface is an image obtained through color retention processing. After the mobile phone exits the color retention mode, the recorded image on the shooting interface may be a color image. In this way, the mobile phone may record the image obtained through color retention processing and obtain video experience of a dynamic change of a color image, so that visual impact experience can be provided for the user, and the user can obtain personalized and diversified videos.

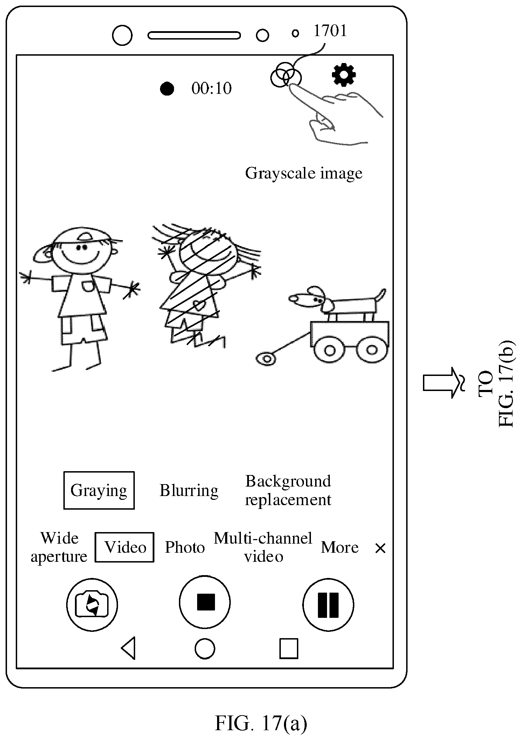

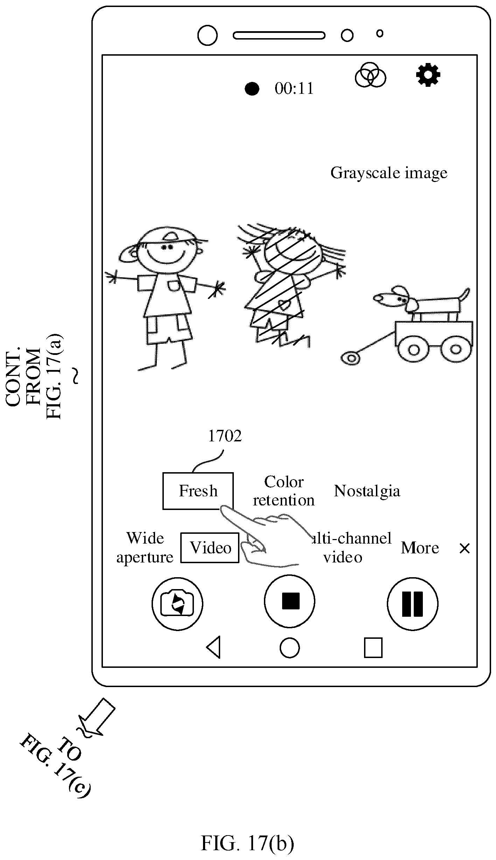

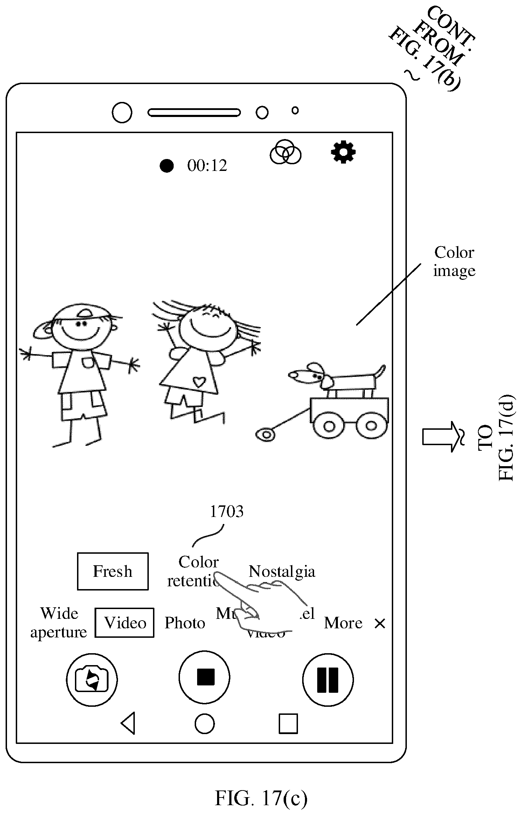

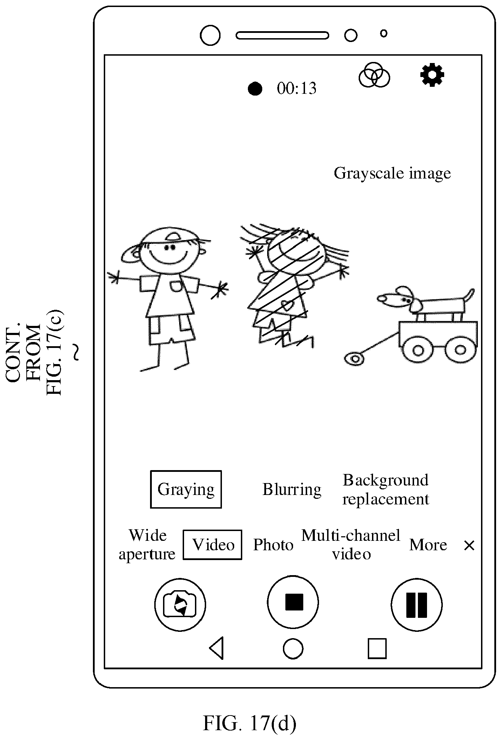

For example, as shown in a shooting interface shown in FIG. 17(a), a current mode is a color retention mode. After the mobile phone detects an operation of tapping a filter control 1701 by the user, as shown in FIG. 17(b), the mobile phone displays a control such as a fresh mode control 1702. After detecting an operation of tapping the fresh mode control 1702 by the user, the mobile phone enters a fresh mode. As shown in FIG. 17(c), a recorded image on the shooting interface is a color image. After the mobile phone detects an operation of tapping a color retention mode control 1703 by the user, as shown in FIG. 17(d), the mobile phone enters the color retention mode again, and retains the color of the target region.

309: After detecting an operation of stopping shooting by the user, the mobile phone stops video recording and generates a video.

After detecting the operation of stopping shooting by the user, the mobile phone may stop video recording, and perform video encoding on image data during video recording, to generate a video file captured in the color retention mode. Color retention and post-processing are performed on the video image in the video file.

In the solutions described in steps 301 to 309, before starting video recording, the mobile phone may determine the target object and the target processing mode. During video recording, the mobile phone may perform color retention processing and post-processing on the captured image, to capture the video. In a video image of the video, image colors of target regions in which one or more individuals are located in the target object are retained. To be specific, the mobile phone may retain a color of one individual, colors of a plurality of individuals of different types, or colors of a plurality of individuals of a same type by using a single individual as a unit, to improve color retention flexibility and precision, highlight the target object, and improve shooting experience of the user. In addition, post-processing such as graying, blurring, or background replacement may be performed on the background region, so that image processing flexibility can be improved, and the user can obtain personalized and diversified video images.

The foregoing content is described by using an example in which the mobile phone enters the color retention mode before detecting the shooting operation of the user. In some other embodiments, the mobile phone may enter the color retention mode after detecting the shooting operation of the user. After entering the color retention mode, the mobile phone may perform instance segmentation on the image obtained by the camera during video recording, to determine regions in which different individuals are located in the preview image. The mobile phone may further determine the target processing mode and the target object, to retain the color of the target region in which the target object is located in the captured image, and perform post-processing on the background region according to the target processing mode.

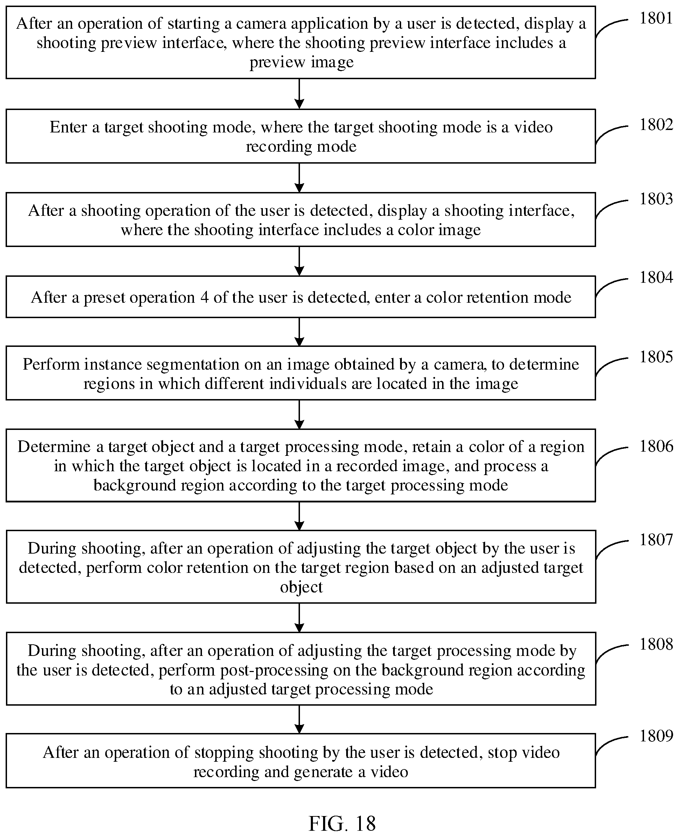

As shown in FIG. 18, the method may include the following steps.

1801: After detecting an operation of starting a camera application by a user, the mobile phone displays a shooting preview interface, where the shooting preview interface includes a preview image.

For step 1801, refer to related descriptions in step 301.

1802: The mobile phone enters a target shooting mode, where the target shooting mode is a video recording mode.

For step 1802, refer to related descriptions in step 302.

1803: After detecting a shooting operation of the user, the mobile phone displays a shooting interface, where the shooting interface includes a color image.

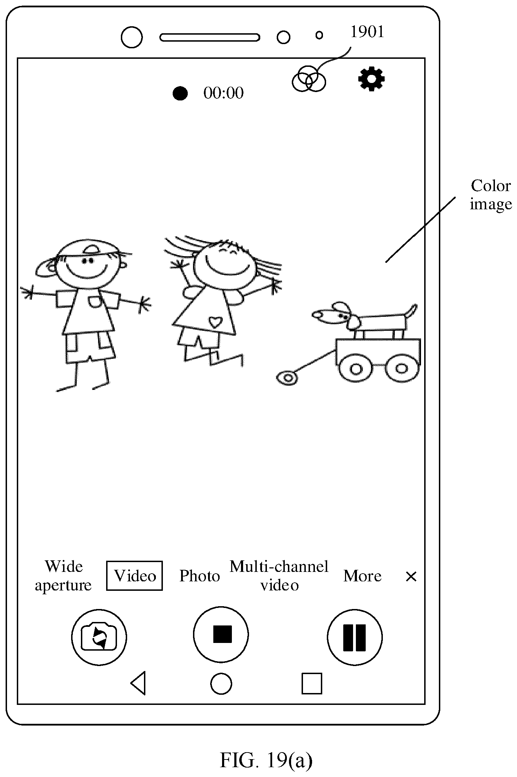

Different from the shooting interface in step 306, a recorded image on the shooting interface displayed in step 1803 is a color image on which color retention processing and post-processing are not performed. For example, for the shooting interface, refer to FIG. 19(a).

1804: After detecting a preset operation 4 of the user, the mobile phone enters a color retention mode.

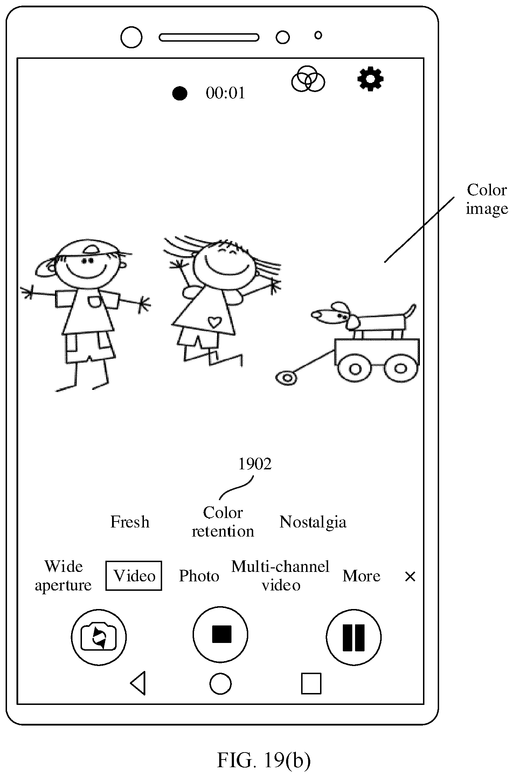

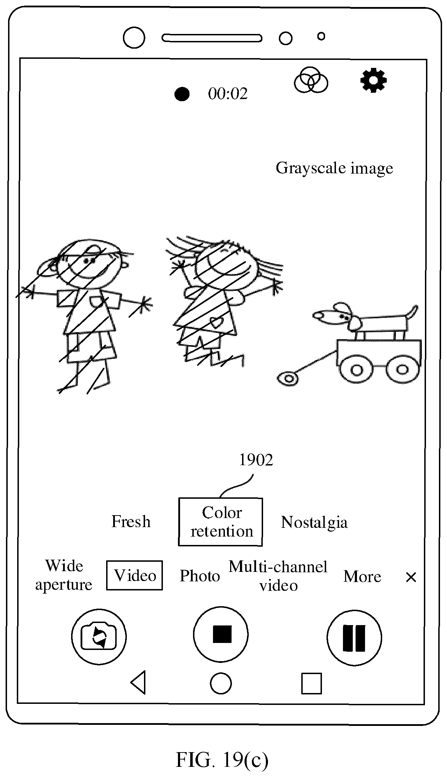

There may be a plurality of preset operations 4. For example, after the mobile phone detects an operation of tapping a filter control 1901 on the shooting interface shown in FIG. 19(a), as shown in FIG. 19(b), the mobile phone displays a color retention mode control 1902. After detecting an operation of tapping the color retention mode control 1902 by the user, the mobile phone enters the color retention mode. As shown in FIG. 19(c), a color of a part of region on the shooting interface is retained, and the other region is a grayscale image. The preset operation 4 may include an operation of tapping a filter control 1092 and tapping the color retention mode control 1902 by the user.

1805: The mobile phone performs instance segmentation on the image obtained by the camera, to determine regions in which different individuals are located in the image.

For step 1805, refer to related descriptions in step 304.

1806: The mobile phone determines a target object and a target processing mode, retains a color of a region in which the target object is located in the recorded image, and processes a background region according to the target processing mode, where the target object includes one or more individuals, and the plurality of individuals belong to a same type or different types.

For a manner of determining the target processing mode by the mobile phone in step 1806, refer to related descriptions in step 305. A difference lies in that the mobile phone determines the target processing mode during video recording preview in step 305, but the mobile phone determines the target processing mode during video recording in step 1806. Details are not described herein again.

For a manner of determining the target object by the mobile phone in step 1806, refer to related descriptions in step 305. A difference lies in that the mobile phone determines the target object during video recording preview in step 305, but the mobile phone determines the target object during video recording in step 1806. Details are not described herein again.

In some other embodiments, the mobile phone may not perform step 1804, but performs the following step after step 1803: After detecting a preset operation 5 of the user, the mobile phone enters a target processing mode, determines a target object, retains a color of a region in which the target object is located in the recorded image, and processes a background region according to the target processing mode, where the target processing mode includes a graying mode, a blurring mode, and a background replacement mode. For an implementation of this step, refer to related descriptions in step 300. A difference lies in that the mobile phone performs related processing during video recording herein, but the mobile phone performs related processing during video recording preview in step 300.

After determining the target object and the target processing mode, the mobile phone processes the captured video image based on the target object and the target processing mode. In the recorded image displayed on the shooting interface, a color of the target region is retained, and an image in the background region is an image obtained after processing is performed according to the target processing mode.

Further, the method may further include the following steps.

1807: During shooting, after detecting an operation of adjusting the target object by the user, the mobile phone performs color retention on the target region based on an adjusted target object.

For step 1807, refer to related descriptions in step 307.

1808: During shooting, after detecting an operation of adjusting the target processing mode by the user, the mobile phone performs post-processing on the background region according to an adjusted target processing mode.

For step 1808, refer to related descriptions in step 308.

1809: After detecting an operation of stopping shooting by the user, the mobile phone stops video recording and generates a video.

For step 1809, refer to related descriptions in step 309.

In the solutions described in steps 1801 to 1809, after starting video recording, the mobile phone may determine the target object and the target processing mode. During video recording, the mobile phone may perform color retention processing and post-processing on the captured image, to capture the video. In a video image of the video, image colors of target regions in which one or more individuals are located in the target object are retained. To be specific, the mobile phone may retain a color of one individual, colors of a plurality of individuals of different types, or colors of a plurality of individuals of a same type by using a single individual as a unit, to improve color retention flexibility and precision, highlight the target object, and improve shooting experience of the user. In addition, post-processing such as graying, blurring, or background replacement may be performed on the background region, so that image processing flexibility can be improved, and the user can obtain personalized and diversified video images.

It should be noted that the foregoing content is described by using an example in which the video recording mode is a single-channel video recording mode. In a multi-channel video recording mode, each channel of video image may be recorded by using a color retention processing and post-processing method in the foregoing video recording mode. Alternatively, in a multi-channel video recording mode, the mobile phone may perform color retention processing and post-processing on some channels of video images based on a selection operation of the user, to obtain more personalized and diversified video images.

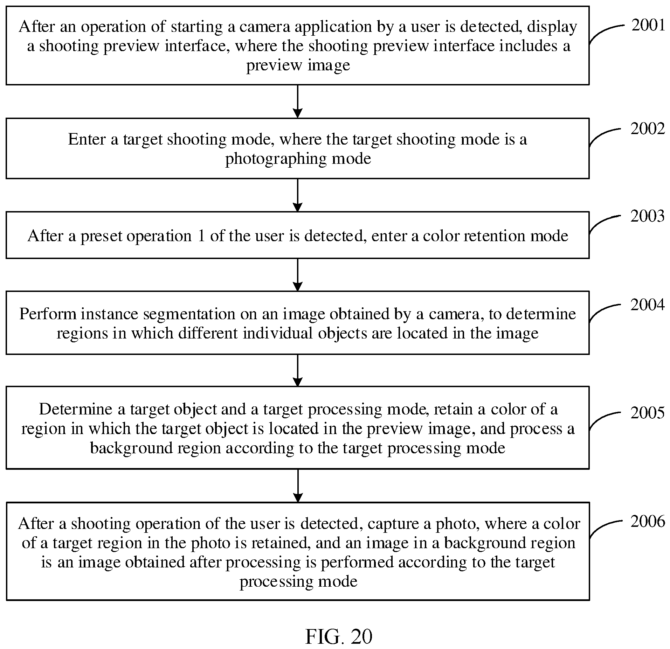

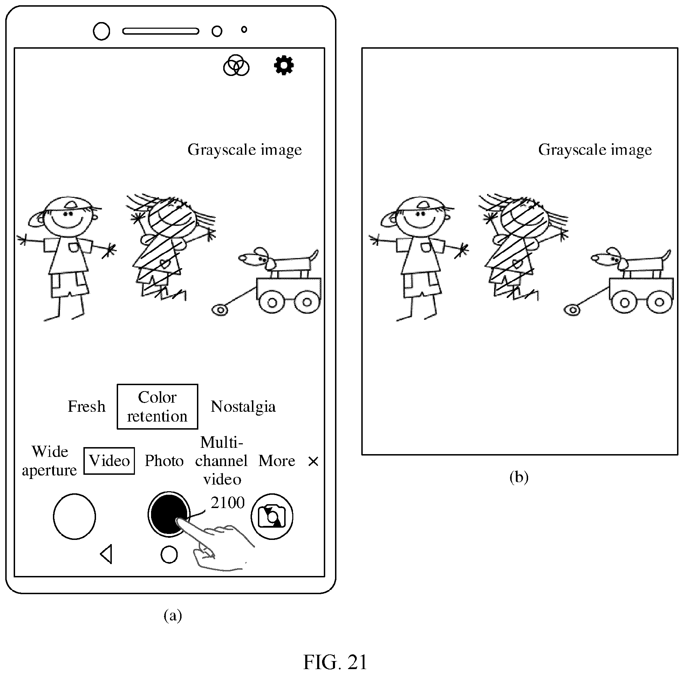

An embodiment of this application provides an image color retention method, which may be applied to a photographing scenario. As shown in FIG. 20, the method includes steps 2001 to 2005. Steps 2001 to 2005 may be steps 301 to 305. A difference lies in that the target shooting mode in step 2002 is a photographing mode, and the mobile phone enters the color retention mode based on a shooting preview interface in the photographing mode in step 2003. For example, after the mobile phone enters the color retention mode, for the shooting preview interface in the photographing mode, refer to FIG. 4(b). For example, when the target processing mode is the graying mode, and the target object is a character 2, for the shooting preview interface, refer to (a) in FIG. 21. The mobile phone retains a color of a region in which the character 2 is located.

As shown in FIG. 20, after step 2005, the method may further include the following step:

2006: After detecting a shooting operation of the user, the mobile phone captures a photo, where a color of a target region in the photo is retained, and an image in a background region is an image obtained after processing is performed according to the target processing mode.

The shooting operation is a photographing operation. For example, after detecting that the user taps a shooting control 2100 shown in (a) in FIG. 21, the mobile phone captures a photo shown in (b) in FIG. 21. A color of a target region in which a character 2 is located in the photo is retained, and an image in a background region is an image obtained after processing is performed according to the graying mode serving as the target processing mode.

In the solutions described in steps 2001 to 2006, the mobile phone may perform color retention processing and post-processing on the captured image, to capture a photo. In the photo, colors of target regions in which one or more individuals are located in the target object are retained. To be specific, the mobile phone may retain a color of one individual, colors of a plurality of individuals of different types, or colors of a plurality of individuals of a same type by using a single individual as a unit, to improve color retention flexibility and precision, highlight the target object, and improve shooting experience of the user. In addition, post-processing such as graying, blurring, or background replacement may be performed on the background region, so that image processing flexibility can be improved, and the user can obtain personalized and diversified photos.

In some other embodiments, the mobile phone may not perform step 2003, but performs the following step after step 2002: After detecting a preset operation 6 of the user, the mobile phone enters a target processing mode, determines a target object, retains a color of a region in which the target object is located in the preview image, and processes a background region according to the target processing mode, where the target processing mode includes a graying mode, a blurring mode, and a background replacement mode. For an implementation of this step, refer to related descriptions in step 300.

The foregoing content is described by using an example in which the mobile phone captures one photo. The mobile phone may alternatively capture a plurality of photos at a time in a burst shoot mode. Shooting duration in the burst shoot mode is short, and to-be-shot individual objects in a plurality of continuously captured photos basically do not change. Therefore, an image color retention method in the burst shoot mode is similar to an image color retention method used when one photo is captured. The mobile phone may determine a target object and a target processing mode before detecting a shooting operation of the user, to capture a plurality of photos. Details are not described herein.

In some other embodiments, the mobile phone may further perform part segmentation on an individual in an image while the mobile phone distinguishes between individuals based on instance segmentation. For one individual, different parts may be obtained through segmentation by using different part segmentation policies. For example, in a part segmentation policy, a character may include parts such as the head, neck, arms, hands, clothing, legs, and feet. In another part segmentation policy, a character may include parts such as the hair, forehead, ears, nose, face, mouth, neck, and arms.

In this embodiment of this application, a color in an image may be retained based on part segmentation by using a part as a unit, and post-processing such as graying, blurring, or background replacement is performed on a background region. In this case, a difference from the foregoing instance segmentation-based image color retention method lies in that the target object may include one or more parts, and the background region includes a region other than the one or more parts.

It may be understood that the plurality of parts included in the target object may belong to a same individual, or may belong to different individuals. This is not limited in this embodiment of this application. The target object may be one or more default parts or one or more parts indicated by the user. In addition, the target object may be further switched based on an indication operation of the user.

In some technical solutions, the target object may be a part indicated by the user. For example, after detecting an operation of tapping a part color retention mode control by the user, the mobile phone enters a part color retention mode. After detecting an operation of tapping the head of a character 2 by the user, the mobile phone determines the head of the character 2 as the target object, to retain a color of the head of the character 2. The mobile phone may further perform post-processing such as graying, blurring, or background replacement on a region other than the head of the character 2.

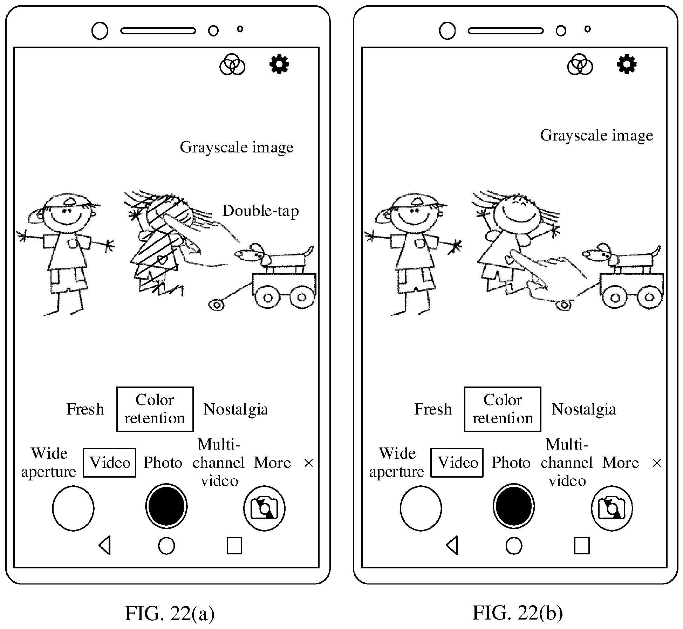

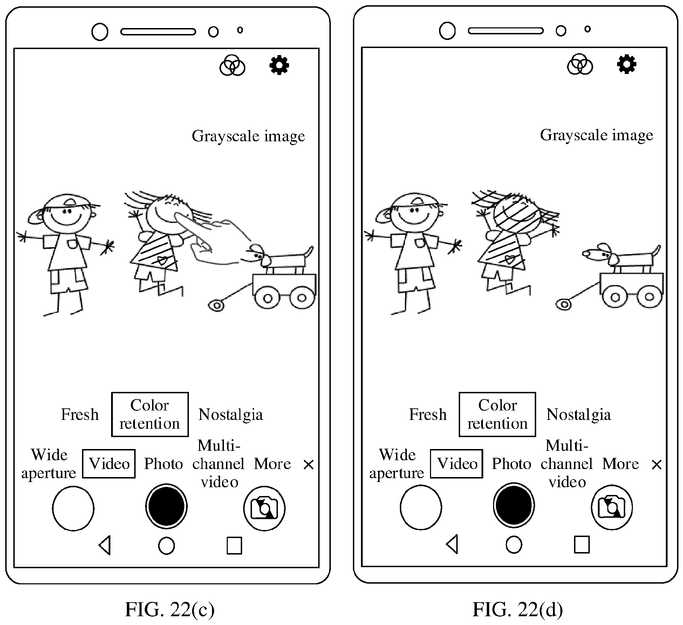

For another example, on a shooting preview interface shown in FIG. 22(a), after detecting a preset operation 7 (for example, a double-tap operation) performed by the user on a character 2, the mobile phone may perform part segmentation on the character 2. In some embodiments, as shown in FIG. 22(b), a region in which the character 2 is located changes to a grayscale image. In some embodiments, the mobile phone may further display a part segmentation status of the individual. Then, after detecting an operation of tapping a skirt of the character 2 by the user, the mobile phone determines the skirt of the character 2 as the target object. As shown in FIG. 22(c), the mobile phone retains a color of a region in which the skirt of the character 2 is located. The mobile phone performs post-processing such as graying, blurring, or background replacement on a region other than the skirt of the character 2. After the mobile phone detects an operation of tapping the head of the character 2 by the user, as shown in FIG. 22(d), the mobile phone retains colors of regions in which the skirt and the head of the character 2 are located.

In some other technical solutions, the target object may include a part with a similar color to a part indicated by the user in the image. In this embodiment of this application, color similarity means that a difference between pixel values of corresponding pixels is less than a preset threshold. For example, the part indicated by the user is the neck, and the target object may include the neck, and the face and hands with a similar skin color to the neck.

In some other embodiments, the mobile phone may retain a color of a part with a specific color in the image. After the mobile phone detects that the user taps a location, the target object includes a part with a similar pixel value to the location. In this embodiment of this application, pixel value similarity means that a difference between pixel values is less than a preset threshold.

In this way, the mobile phone may retain a color of one part, colors of a plurality parts of different individuals, or colors of different parts of a same individual by using a single part as a unit, to reduce a setting granularity of color retention, improve color retention flexibility and precision, and highlight the target object, so that a captured image can be more creative, and shooting experience of the user can be improved. In addition, post-processing such as graying, blurring, or background replacement may be performed on the background region, so that image processing flexibility can be improved, and the user can obtain personalized and diversified video images.

In some other embodiments, the mobile phone may retain a color of an individual with a specific color in the image. After the mobile phone detects an operation of tapping a location by the user, the target object includes an individual to which a pixel with a similar pixel value to the location belongs.

In some other embodiments, the mobile phone may further retain a color of a region in which a specific color is located in the image. After the mobile phone detects that the user taps a location, the target object includes a region with a similar pixel value of a pixel to the location.

In this way, the mobile phone may retain colors of parts, individuals, or regions corresponding to a same color from a dimension of a color, to improve color retention flexibility and precision, and highlight a color that needs to be retained, so that a captured image can be more creative, and shooting experience of the user can be improved.

In this embodiment of this application, after shooting is completed, the mobile phone may store a photo and a video obtained through color retention processing and post-processing. In some embodiments, the mobile phone may further store an original image on which color retention processing and post-processing are not performed. Thumbnails of photos and videos obtained through color retention processing and post-processing may be displayed differently from thumbnails of photos and videos on which color retention processing and post-processing are not performed.

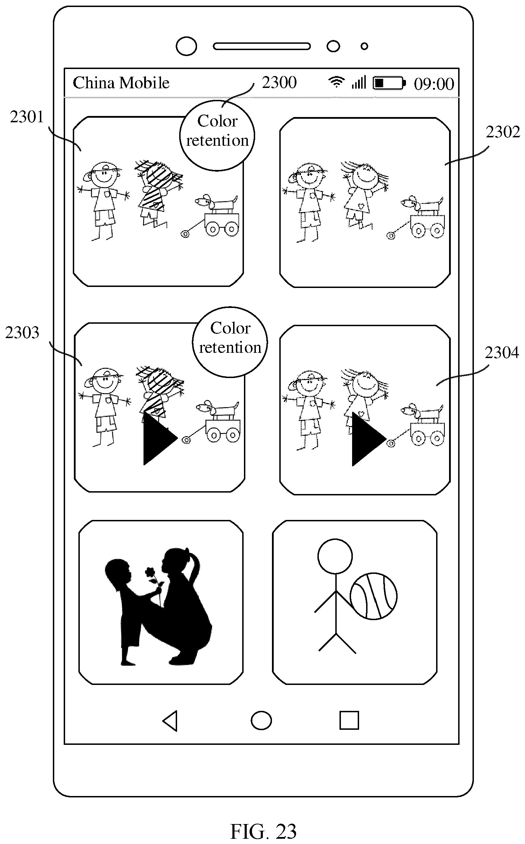

For example, as shown in FIG. 23, a gallery stores a thumbnail 2301 of a photo obtained through color retention processing and post-processing, and a thumbnail 2302 of a photo on which color retention processing and post-processing are not performed. The gallery stores a thumbnail 2303 of a video obtained through color retention processing and post-processing, and a thumbnail 2304 of a video on which color retention processing and post-processing are not performed.

It can be learned from comparison between the thumbnail 2301 and the thumbnail 2302 that a color of a part of region is retained on the thumbnail 2301 of the photo obtained through color retention processing and post-processing, but the thumbnail 2302 is a color image as a whole. In some embodiments, a color retention mark 2300 is displayed on thumbnails of a photo and a video obtained through color retention processing and post-processing.

It should be noted that the video obtained through color retention processing may include a plurality of video image frames. Color retention processing may be performed on some of the video image frames, but color retention processing may not be performed on the other of the video image frames. In some embodiments, one of video image frames on which color retention processing has been performed may be used as a thumbnail image for a video on which color retention processing has been performed, to distinguish the video from a video on which color retention processing has not been performed.

The foregoing content is described by using an example in which image color retention processing is performed in a shooting process. In some other embodiments, the mobile phone may alternatively perform editing processing on a target image obtained by the mobile phone, to determine a target object and a target processing mode, so as to retain a color of a region in which the target object is located based on the target object and the target processing mode, and perform graying processing, blurring processing, or background replacement processing on a background region. For example, the target image may be a photo captured by the mobile phone, an image downloaded by the mobile phone, or an image copied by the mobile phone from another device.

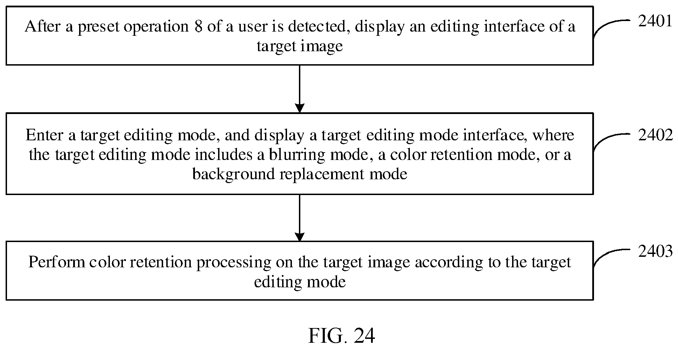

An embodiment of this application further provides an image color retention method, which may be applied to an image editing scenario. As shown in FIG. 24, the method includes the following steps.

2401: After detecting a preset operation 8 of a user, the mobile phone displays an editing interface of a target image.

The target image is an image obtained by the mobile phone, for example, may be a captured photo, a downloaded image, or an image copied from another device.

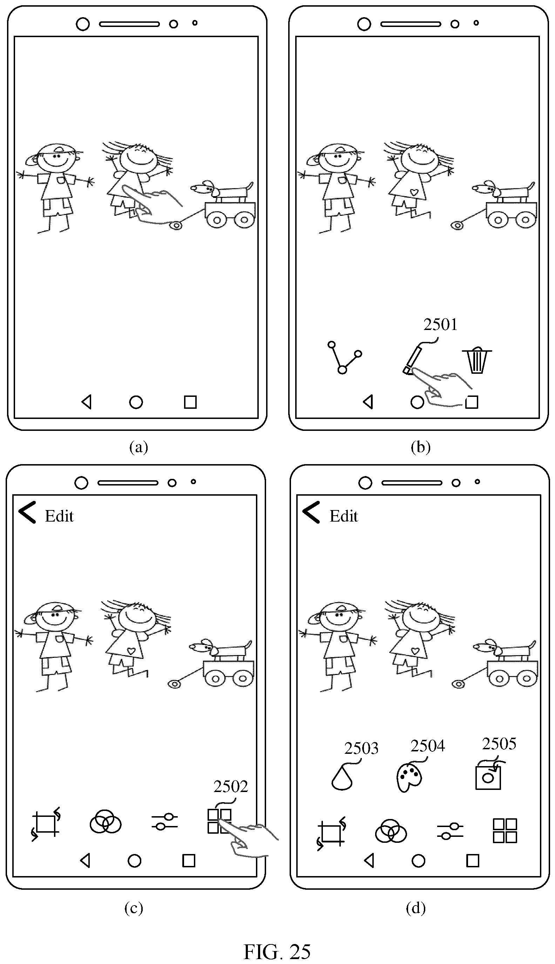

After detecting the preset operation 8 of the user, the mobile phone displays the editing interface of the target image. For example, after the mobile phone detects an operation of tapping a thumbnail of a previously captured target image on a shooting preview interface by the user, or an operation of tapping the thumbnail 2302 of the target image in the gallery shown in FIG. 23 by the user, as shown in (a) in FIG. 25, the mobile phone stretches the target image. Then, after detecting the operation of tapping the target image by the user, the mobile phone displays an interface shown in (b) in FIG. 25. The interface includes an editing control 2501. After detecting an operation of tapping the editing control 2501 by the user, the mobile phone displays an editing interface shown in (c) in FIG. 25. The preset operation 8 may be an operation of tapping the editing control by the user. The image on the editing interface is a color image.

2402: The mobile phone enters a target editing mode, and displays a target editing mode interface, where the target editing mode includes a blurring mode, a color retention mode, or a background replacement mode.

For example, after the mobile phone detects an operation of tapping a control 2502 on the editing interface shown in (c) in FIG. 25, as shown in (d) in FIG. 25, the mobile phone displays an editing mode control. The editing mode control includes a blurring mode control 2503, a color retention mode control 2504, a background replacement mode control 2505, and the like.

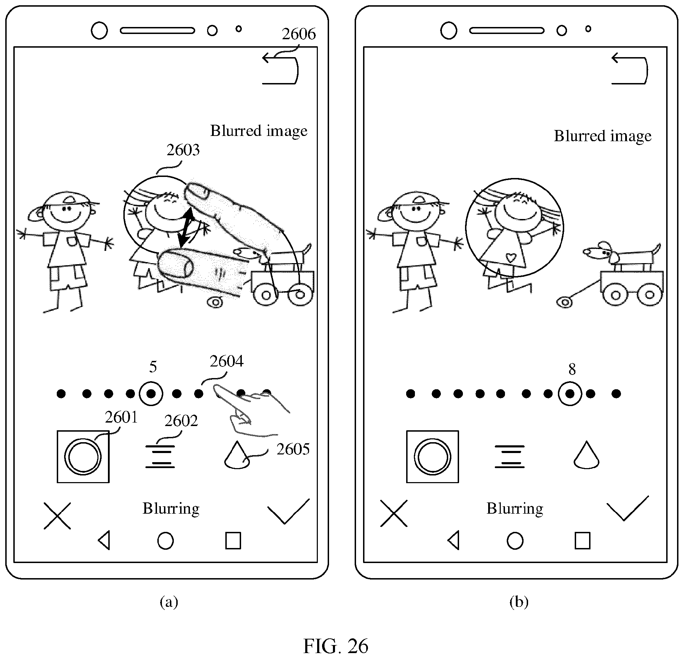

After detecting an operation of tapping the blurring mode control 2503 by the user, the mobile phone enters the blurring mode, and displays a blurring mode interface shown in (a) in FIG. 26.

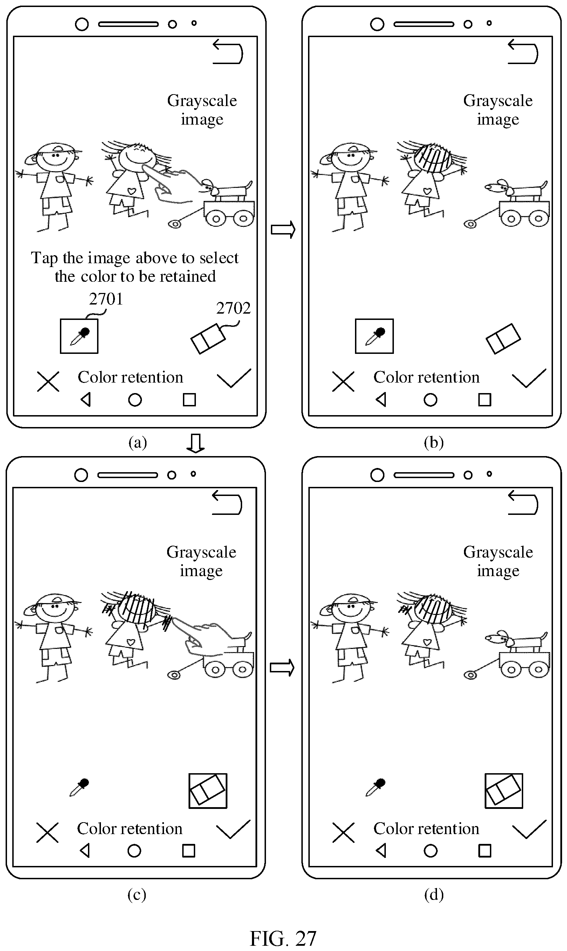

After detecting an operation of tapping the color retention mode control 2504 by the user, the mobile phone enters the color retention mode, and displays a color retention mode interface shown in (a) in FIG. 27. The color retention mode interface includes a grayscale image converted from the target image.

After detecting an operation of tapping the background replacement mode control 2505 by the user, the mobile phone enters the background replacement mode.

2403: The mobile phone performs color retention processing on the target image according to the target editing mode.

When the target editing mode is the blurring mode, the target image includes a region 1, and the region 1 may be referred to as a clear region; and a region other than the region 1 in the target image is referred to as a region 2, and the region 2 may also be referred to as a blurring region. A pixel value of the original target image is retained for an image in the clear region, and an image in the blurring region is a fuzzy image obtained through blurring processing. The mobile phone may adjust a shape and a size of the clear region based on an indication operation of the user. For example, the shape of the clear region may be a circle, an ellipse, or a square (also referred to as a linear shape).

For example, as shown in (a) in FIG. 26, the blurring mode interface includes a circular control 2601 and a linear control 2602. After the circular control 2601 is selected, a shape of a clear region 2603 on the blurring mode interface is a circle. After the linear control 2602 is selected, the shape of the clear region on the blurring mode interface is a square. The mobile phone may adjust the size of the clear region through pinching or dragging of a finger of the user.

In the blurring mode, the mobile phone may invoke an image blurring algorithm, and determine a foreground image and a background image based on a segmentation result. The blurring algorithm simulates image depth estimation, to achieve an effect of a clear foreground subject and a blurred background. The foreground image is an image in the region 1, and the background image is an image in the region 2.

The mobile phone may further adjust a blurring degree of the blurring region based on an indication operation of the user. For example, as shown in (a) in FIG. 26, the blurring mode interface includes a blurring level adjustment control 2604. After the mobile phone detects an operation of tapping different locations on the blurring level adjustment control 2604 by the user, or a dragging operation of the user on the blurring level adjustment control 2604, as shown in (b) in FIG. 26, the mobile phone may adjust a blurring level of the blurring region, and a higher blurring level indicates a higher blurring degree of an image in the blurring region.

In some embodiments, the blurring mode interface may further include a fuzzy control 2605. After detecting an operation of selecting the fuzzy control 2605 and tapping a location in the image by the user, the mobile phone makes the location on the blurring mode interface blurred and fuzzy. For example, if a region that the user wants to clearly display is not in a regular shape such as a circle or a square, the user may use the blurring control to make an edge region of an individual that the user wants to display in a circular region blurred and fuzzy. For another example, the user may use a module control to make a location in the blurring region more blurred and fuzzy.

In some embodiments, the blurring mode interface may further include a back control 2606, used to return to a previous operation. The blurring mode interface may further include a control for completing blurring processing, a control for exiting blurring processing, and the like.

When the target editing mode is the color retention mode, the color retention mode interface includes the grayscale image converted from the target image. In some embodiments, in the color retention mode, the mobile phone may retain a color specified by the user in the target image, that is, the mobile phone may retain a color by color. For example, the mobile phone may prompt the user to tap an image to select a color that needs to be retained.

In some technical solutions, after detecting an operation of tapping a location by the user, the mobile phone retains a color of a region with a similar pixel value to the location on a part to which the location belongs. Pixel value similarity means that a difference between pixel values is less than a preset threshold. For example, as shown in (a) in FIG. 27, the color retention mode interface includes a color selection control 2701. When the color selection control 2701 is selected, after the mobile phone detects an operation of tapping the face of a character 2 on the grayscale image by the user, as shown in (b) in FIG. 27, the mobile phone retains a region of the face with a similar pixel value to the location. After detecting an operation at a location of the neck of the user, the mobile phone retains a region color of the neck with a similar pixel value to the location on the target image.

In some other technical solutions, after detecting an operation of tapping a location by the user, the mobile phone retains a color of each part with a similar pixel value to the location. For example, when the color selection control 2701 is selected, after the mobile phone detects an operation of tapping the face of the character 2 on the grayscale image by the user, as shown in (c) in FIG. 27, the mobile phone retains regions of parts such as the face, neck, and hands with a similar pixel value to the location on the target image. That is, the regions of the parts such as the face, neck, and hands with a similar skin color are a color image, and the other region is a grayscale image.

In some embodiments, the color retention mode interface further includes an eraser control 2702. When the eraser control 2702 is selected, after detecting an operation of performing dragging (or referred to as erasing) in a color retention region by the user, the mobile phone may restore an erased region to a grayscale image. For example, as shown in (c) in FIG. 27, after the mobile phone detects an operation of performing erasing on the left hand of the character 2 by the user by using an eraser, as shown in (d) in FIG. 27, the mobile phone restores a region in which the left hand is located to a grayscale image.

In addition, the color retention mode interface may further include an eraser size adjustment control, used to adjust a size of the eraser (that is, an area of a scope of the eraser). The user may erase, by using the eraser, a region whose color does not need to be retained. For example, the user may fine-tune, by using the eraser, a region whose color needs to be retained, or adjust a boundary between a color retention region and a region in which a grayscale image is located.

In some other embodiments, the color retention mode interface further includes a back control, used to return to a previous operation. The color retention mode interface may further include a control for completing blurring processing, a control for exiting blurring processing, and the like.

In some other technical solutions, after detecting an operation of tapping a location by the user, the mobile phone retains a color of each pixel with a similar pixel value to the location on an individual to which the location belongs. For example, after detecting that the user taps the face of the character 2, the mobile phone retains a color of the face of the character 2 on the target image, and colors of the forehead, neck, and hands of the character 2 with a similar pixel value to the face.

In some other technical solutions, after detecting an operation of tapping a location by the user, the mobile phone retains a color of each region with a similar pixel value to the location.

In some other embodiments, in the color retention mode, the mobile phone may retain a color of a part specified by the user, that is, retain a color by part. For example, the mobile phone may prompt the user to tap an image to select a part whose color needs to be retained. After detecting that the user taps a part, the mobile phone retains a color of the part, and the other region is still a grayscale image. For example, after detecting an operation of tapping the head of the character 2 shown in (a) in FIG. 27 by the user, the mobile phone retains a color of the head, and the other region is a grayscale image.

In some other embodiments, in the color retention mode, the mobile phone may retain a color of an individual specified by the user, that is, retain a color by individual. For example, the mobile phone may prompt the user to tap an image to select an individual whose color needs to be retained. After detecting that the user taps an individual, the mobile phone retains a color of the individual, and the other region is still a grayscale image.

In some embodiments, the color retention mode interface includes a color-based color retention control, an individual-based color retention control, and a part-based color retention control. The mobile phone may perform color retention processing on the target image based on a selection operation of the user by using a corresponding color retention policy.

In this way, the mobile phone may retain colors of some regions in the target image by using a part or an individual as a unit based on a color, to reduce a setting granularity of color retention, improve color retention flexibility and precision, and highlight the target object, so that a captured image can be more creative, and shooting experience of the user can be improved. In addition, post-processing such as graying, blurring, or background replacement may be performed on the background region, so that image processing flexibility can be improved, and the user can obtain personalized and diversified video images.

When the target editing mode is the background replacement mode, the mobile phone may retain the target region in which the target object is located on the target image, and replace an image in the background region with an image in a region at a same location in a background image. It may also be understood that the mobile phone superimposes an image in the target region on the background image. The image in the target region is a foreground image, and the background image is a background image. The target object may be a default object of the mobile phone or an object indicated by the user. The background image may be a default image of the mobile phone or an image selected by the user.

In the background replacement mode, the mobile phone may further replace the background region with one background image or a combination of a plurality of background images according to an indication of the user. The mobile phone may further stretch or pinch the target object, move a location of the target object, and add or delete an individual to or from the target object based on an indication operation of the user.

The foregoing content is described by using an editing processing process of a single image as an example. For a plurality of images obtained through operations such as burst shooting, in some embodiments, the mobile phone may perform color retention processing and editing processing such as graying, blurring, or background replacement on each image in the foregoing manner. In some other embodiments, because objects on all continuously captured images are basically the same, the mobile phone may perform editing processing on one of the images (for example, a first image) based on an indication operation of the user, and automatically perform color retention processing and editing processing such as graying, blurring, or background replacement on the other images in a same manner. For example, if the mobile phone performs color retention on a character 1 in the first image based on an indication operation of the user, the mobile phone also automatically performs color retention on a character 1 in each of the other images. If the mobile phone performs blurring processing on a region other than the character 1 in the first image, the mobile phone also automatically performs blurring processing on a region other than the character 1 in each of the other images. If the mobile phone replaces a region other than the character 1 in the first image with a background image, the mobile phone also automatically replaces a region other than the character 1 in each of the other images with the same background image.

The foregoing content is described by using an example in which the target image is an image on which image color retention processing is not performed. Alternatively, the target image may be an image obtained through image color retention processing. During current editing, the mobile phone may perform image color retention processing again based on an indication operation of the user. For example, during current editing, a target region whose color needs to be retained may be adjusted, and a clear region may be adjusted or replaced with a new background.

In this way, the mobile phone may perform editing processing on an obtained image, to retain a color in the image by using an individual or a part as a unit, so that a subject can be selected more accurately, flexibility and precision of color retention setting can be improved, and an edited image can be more creative. In addition, post-processing such as graying, blurring, or background replacement may be performed on the background region, so that image processing flexibility can be improved, and the user can obtain personalized and diversified video images.

The foregoing content is described by using an example in which image color retention processing is performed in a shooting process. In some other embodiments, the mobile phone may alternatively perform editing processing on a target video obtained by the mobile phone, for example, a video captured by the mobile phone, a video downloaded by the mobile phone, or a video copied by the mobile phone from another device, to determine a target object and a target post-editing mode, so as to retain a color of a region in which the target object is located based on the target object and the target post-editing mode, and perform graying processing, blurring processing, or background replacement processing on a background region.

For example, the mobile phone displays an editing interface of the target video. In some embodiments, the mobile phone may perform color retention processing and processing such as graying, blurring, or background replacement on one or more images in the target video based on an indication operation of the user. An unprocessed image in the target video remains as an original color image.

In some other embodiments, the mobile phone may perform color retention processing and processing such as graying, blurring, or background replacement on an image (for example, a first image) in the target video. Color retention processing and processing such as graying, blurring, or background replacement are performed on an image after the image in a same manner.

For example, based on an indication operation of the user, the mobile phone retains a color of a region in which a character 1 serving as the target object is located in a first image in the target video, and retains a color of a vehicle 1 serving as the target object in a tenth image. In this case, a color of a region in which the character 1 is located is also automatically retained in each of a second image to a ninth image. If the second image to the ninth image do not include the character 1, a pure color image or a pure grayscale image is displayed. The color of the vehicle 1 is also automatically retained in images after the tenth image. If the images after the tenth image do not include the vehicle 1, a pure color image or a pure grayscale image is displayed.

For another example, based on an indication operation of the user, the mobile phone performs graying processing on a region other than a character 1 in a first image in the target video, and performs graying processing on a region other than a vehicle 1 in a tenth image. In this case, graying processing is also automatically performed on a region other than the character 1 in each of a second image to a ninth image. If the second image to the ninth image do not include the character 1, a pure grayscale image is displayed. Graying processing is also automatically performed on a region other than the vehicle 1 in each of images after the tenth image. If the images after the tenth image do not include the vehicle 1, a pure grayscale image is displayed.

For another example, based on an indication operation of the user, the mobile phone performs blurring processing on a region other than a character 1 in a first image in the target video, and performs blurring processing on a region other than a vehicle 1 in a tenth image. In this case, blurring processing is also automatically performed on a region other than the character 1 in each of a second image to a ninth image. If the second image to the ninth image do not include the character 1, a pure blurred image or an original color image is displayed. Blurring processing is also automatically performed on a region other than the vehicle 1 in each of images after the tenth image. If the images after the tenth image do not include the vehicle 1, a pure blurred image or an original color image is displayed.

In this way, the mobile phone may perform editing processing on an obtained video, to retain a color in the video image by using an individual or a part as a unit, so that a subject can be selected more accurately, flexibility and precision of color retention setting can be improved, and an edited video can be more creative. In addition, post-processing such as graying, blurring, or background replacement may be performed on the background region, so that image processing flexibility can be improved, and the user can obtain personalized and diversified video images.

The mobile phone may obtain each individual object through instance segmentation. Based on this, in another embodiment of this application, the mobile phone may further synthesize an individual object in a video or an image set with that of another video, to achieve a personalized, vivid, or special video processing effect.

In some embodiments, for a generated video 1, the mobile phone may generate a short video based on a target subject. There may be one or more target subjects. An image of the short video is an image of a target subject included in the video 1, and only an image of a region in which the target subject is located is retained. In this way, the short video generated by the mobile phone is similar to an animation emoticon package of the target subject.

Alternatively, for an image set 1, the mobile phone may generate an image set 2 based on a target subject. An image in the image set 2 is an image of a target subject included in the image set 1, and only an image of a region in which the target subject is located is retained in the image.

In some other embodiments, the mobile phone may synthesize a video in which a target subject is located with another video. For example, the target subject is a character, a video 1 is a video in which the target subject dances on the grass, and a video 2 is a starry time-lapse video. The mobile phone may superimpose an image of a region in which the target subject is located in the video 1 on an image of the video 2, so that the video 1 and the starry time-lapse video 2 are synthesized into a new video, to generate a new video in which the target subject dances in the starry sky.

For another example, a video 1 is a slow-motion video about a target subject. The mobile phone may obtain the target subject in the video 1 through segmentation, and synthesize the target subject with an image in another video (for example, a time-lapse video), to generate a new video.

For another example, the target subject is a character. The mobile phone may extract an image of a region in which the target subject is located from a video in which the target subject is an adult, and synthesize the image with a video in which the target subject is a child, to give the user a feeling of meeting the user during childhood when the user grows up. Alternatively, the mobile phone may extract an image of a region in which the target subject is located from a video in which the target subject is old, and synthesize the image with a video in which the target subject is young, to give the user a feeling of traversing time and space.

In some other embodiments, the mobile phone may further extract target subjects from different videos, and synthesize the target subjects with another new video. For example, a couple in different places take a video separately. Then, the mobile phone extracts the two characters in the two videos as target subjects, and puts the two characters into a new background video, to generate a new video in which the couple are in a same place.

For another example, the mobile phone may extract an image of a region in which the target subject is located from a slow-motion video, extract an image of a region in which the target subject is located from a fastmotion video, and synthesize the image of the region in which the target subject is located into a new video, to form a clear sense of difference between a fast speed and a slow speed.

For another example, a video 1 is a video of a coach, and a video 2 is a video of a student. The mobile phone may extract an image of a region in which the coach is located from the video 1, extract an image of a region in which the student is located from the video 2, and synthesize the video of the coach and the video of the student into a new video, to determine whether an action of the student is standard.

In some other embodiments, the mobile phone may extract a target subject from a video, and synthesize the target subject with a plurality of other videos. For example, the target subject is a character, and a video 1 is a video in which the target subject exercises martial arts. A video 2 to a video 5 are respectively background videos of spring, summer, autumn, and winter. The mobile phone may extract an image of a region in which the target subject is located from the video 1, and separately synthesize the image with the video 2 to the video 5 based on different time periods, to give the user a feeling of practicing martial arts for four seasons.

In some other embodiments, the mobile phone may further extract a same target subject from a plurality of videos for clipping, to generate a new video. For example, for a plurality of videos about a process in which a child grows up, an image of the child in each video is extracted through cropping for user editing or intelligent editing. Finally, the images are automatically synthesized together, and then one or more new background videos are added, to generate a new video.

For example, the target subject is a character. The mobile phone may extract an image of a region in which the target subject is located from each of a video in which the target subject often falls down when the target subject just learns to slide, a video in which the target subject is relatively skilled after the target subject learns to slide for a period of time, and a video in which the target subject slides very smoothly the target subject learns to slide for a period of time, that is, videos in different stages in which the target subject learns to slide, synthesize the images together, and add one or more new background videos, to generate a new video.

In addition, the mobile phone may further perform color retention processing on the target subject in the synthesized video image. Details are not described herein.

The foregoing content is described by using an example in which the electronic device is a mobile phone. When the electronic device is another device, the image color retention manner provided in the foregoing embodiment may also be used. Details are not described herein.

It can be understood that, to implement the foregoing functions, the electronic device includes a corresponding hardware and/or software module for performing each of the functions. With reference to the examples described in embodiments disclosed in this specification, algorithms and steps may be implemented by hardware or a combination of hardware and computer software in this application. Whether a function is implemented by hardware or hardware driven by computer software depends on a particular application and a design constraint of the technical solutions. A person skilled in the art may use different methods to implement the described functions for each particular application with reference to embodiments, but it should not be considered that the implementation goes beyond the scope of this application.

In embodiments of this application, function modules in the electronic device may be defined based on the foregoing method examples. For example, each function module may be defined in a correspondence to each function, or two or more functions may be integrated into one processing module. The integrated module may be implemented in a form of hardware. It should be noted that, in embodiments, division into the modules is an example and is merely logical function division, and there may be other division manners during actual implementation.

An embodiment of this application further provides an electronic device, including: a camera, configured to capture an image; a screen, configured to display an interface; one or more processors; and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the image color retention method in the foregoing embodiments.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the image color retention method in the foregoing embodiments.

An embodiment of this application further provides a computer-readable storage medium. The computer-readable storage medium stores computer instructions. When the computer instructions are run on an electronic device, the electronic device is enabled to perform the foregoing related method steps, to implement the image color retention method in the foregoing embodiments.

An embodiment of this application further provides a computer program product. When the computer program product is run on a computer, the computer is enabled to perform the foregoing related steps, to implement the image color retention method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the image color retention method performed by the electronic device in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein.

Based on the descriptions of the foregoing implementations, a person skilled in the art may understand that, for ease and brevity of description, division into the foregoing function modules is merely used as an example for description. During actual application, the foregoing functions may be allocated to different function modules for implementation based on a requirement, that is, an internal structure of the apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and there may be other division manners during actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, that is, may be located in one position, or may be distributed in a plurality of different positions. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image color retention method, wherein the method is applied to an electronic device, the electronic device comprises a color camera, and the method comprises:
starting a camera application, and displaying a preview interface;
determining a first individual object as a target object, and determining a target processing mode;
generating a first preview image based on an image obtained by the color camera, wherein the first preview image comprises the first individual object and a second individual object, and the second individual object is different from the first individual object;
displaying the first preview image on the preview interface, wherein an image of a first region in the first preview image is displayed in color, an image of a second region in the first preview image is an image obtained after processing is performed according to the target processing mode, the first region is an image region occupied by the first individual object in the first preview image, and the second region is a region other than the first region in the first preview image;
determining the second individual object as the target object in response to a first operation of a user; and
displaying a second preview image on the preview interface, wherein an image of a third region in the second preview image is displayed in color, an image of a fourth region in the second preview image is an image obtained after processing is performed according to the target processing mode, the third region is an image region occupied by the second individual object in the second preview image, and the fourth region is a region other than the third region in the second preview image.

2. The method according to claim 1, wherein the method further comprises:
switching the target processing mode in response to a second operation of the user; and
updating the image of the fourth region according to a switched target processing mode.

3. The method according to claim 1 or 2, wherein before the determining a first individual object as a target object, the method further comprises:
displaying a third preview image on the preview interface, wherein the third preview image is a grayscale image converted from the image obtained by the color camera.

4. The method according to any one of claims 1 to 3, wherein the method further comprises:
displaying a shooting interface in response to a video recording operation of the user, wherein the shooting interface comprises a recorded image, and the recorded image comprises the third region and the fourth region; and
stopping video recording and generating a video in response to a video recording stop operation of the user.

5. An image color retention method, wherein the method is applied to an electronic device, the electronic device comprises a color camera, and the method comprises:
starting a camera application, and displaying a preview interface;
displaying a shooting interface in response to a video recording operation of a user;
determining a first individual object as a target object, and determining a target processing mode;
generating a first recorded image based on an image obtained by the color camera, wherein the first recorded image comprises the first individual object and a second individual object, and the second individual object is different from the first individual object;
displaying the first recorded image on the shooting interface, wherein an image of a first region in the first recorded image is displayed in color, an image of a second region in the first recorded image is an image obtained after processing is performed according to the target processing mode, the first region is an image region occupied by the first individual object in the first recorded image, and the second region is a region other than the first region in the first recorded image;
determining the second individual object as the target object in response to a first operation of the user;
displaying a second recorded image on the shooting interface, wherein an image of a third region in the second recorded image is displayed in color, an image of a fourth region in the second recorded image is an image obtained after processing is performed according to the target processing mode, the third region is an image region occupied by the second individual object in the second recorded image, and the fourth region is a region other than the third region in the second recorded image; and
stopping video recording and generating a video in response to a video recording stop operation of the user.

6. The method according to claim 5, wherein before the determining a first individual object as a target object, the method further comprises:
displaying a third recorded image on the shooting interface, wherein the third recorded image is a grayscale image converted from an image obtained by the color camera.

7. The method according to any one of claims 4 to 6, wherein before the stopping video recording and generating a video, the method further comprises:
determining a third individual object as the target object in response to a third operation of the user; and
displaying a fourth recorded image on the shooting interface, wherein an image of a fifth region in the fourth recorded image is displayed in color, an image of a sixth region in the fourth recorded image is an image obtained after processing is performed according to the target processing mode, the fifth region is an image region occupied by the third individual object in the fourth recorded image, and the sixth region is a region other than the fifth region in the fourth recorded image.

8. The method according to any one of claims 4 to 6, wherein before the stopping video recording and generating a video, the method further comprises:
switching the target processing mode in response to a fourth operation of the user; and
updating the image of the fourth region on the shooting interface according to a switched target processing mode.

9. The method according to any one of claims 1 to 3, wherein the method further comprises:
generating a photo in response to a photographing operation of the user, wherein the photo comprises the third region and the fourth region.

10. The method according to any one of claims 1 to 9, wherein the determining a first individual object as a target object comprises:
determining the first individual object as a character on the image obtained by the color camera, wherein the first individual object is the target object; or
determining the first individual object as the target object in response to an operation performed by the user on the first individual object.

11. The method according to any one of claims 1 to 10, wherein the target processing mode is a first mode, and the image of the second region is a grayscale image obtained after processing is performed according to the first mode; or
the target processing mode is a second mode, and the image of the second region is a blurred image obtained after processing is performed according to the second mode; or
the target processing mode is a third mode, and the image of the second region is an image that is obtained after processing is performed according to the third mode and that is replaced with another image.

12. The method according to claim 11, wherein the determining a target processing mode comprises:
determining the target processing mode as a default first mode.

13. An electronic device, comprising:
a color camera, configured to capture a color image;
a screen, configured to display an interface;
one or more processors;
a memory; and
one or more computer programs, wherein the one or more computer programs are stored in the memory, the one or more computer programs comprise instructions, and when the instructions are executed by the electronic device, the electronic device is enabled to perform the following steps:
starting a camera application, and displaying a preview interface;
determining a first individual object as a target object, and determining a target processing mode;
generating a first preview image based on an image obtained by the color camera, wherein the first preview image comprises the first individual object and a second individual object, and the second individual object is different from the first individual object;
displaying the first preview image on the preview interface, wherein an image of a first region in the first preview image is displayed in color, an image of a second region in the first preview image is an image obtained after processing is performed according to the target processing mode, the first region is an image region occupied by the first individual object in the first preview image, and the second region is a region other than the first region in the first preview image;
determining the second individual object as the target object in response to a first operation of a user; and
displaying a second preview image on the preview interface, wherein an image of a third region in the second preview image is displayed in color, an image of a fourth region in the second preview image is an image obtained after processing is performed according to the target processing mode, the third region is an image region occupied by the second individual object in the second preview image, and the fourth region is a region other than the third region in the second preview image.

14. The electronic device according to claim 13, wherein when the instructions are executed by the electronic device, the electronic device is further enabled to perform the following steps:
switching the target processing mode in response to a second operation of the user; and
updating the image of the fourth region according to a switched target processing mode.

15. The electronic device according to claim 13 or 14, wherein when the instructions are executed by the electronic device, the electronic device is further enabled to perform the following steps:
displaying a shooting interface in response to a video recording operation of the user, wherein the shooting interface comprises a recorded image, and the recorded image comprises the third region and the fourth region; and
stopping video recording and generating a video in response to a video recording stop operation of the user.

16. An electronic device, comprising:
a color camera, configured to capture a color image;
a screen, configured to display an interface;
one or more processors;
a memory; and
one or more computer programs, wherein the one or more computer programs are stored in the memory, the one or more computer programs comprise instructions, and when the instructions are executed by the electronic device, the electronic device is enabled to perform the following steps:
starting a camera application, and displaying a preview interface;
displaying a shooting interface in response to a video recording operation of a user;
determining a first individual object as a target object, and determining a target processing mode;
generating a first recorded image based on an image obtained by the color camera, wherein the first recorded image comprises the first individual object and a second individual object, and the second individual object is different from the first individual object;
displaying the first recorded image on the shooting interface, wherein an image of a first region in the first recorded image is displayed in color, an image of a second region in the first recorded image is an image obtained after processing is performed according to the target processing mode, the first region is an image region occupied by the first individual object in the first recorded image, and the second region is a region other than the first region in the first recorded image;
determining the second individual object as the target object in response to a first operation of the user;
displaying a second recorded image on the shooting interface, wherein an image of a third region in the second recorded image is displayed in color, an image of a fourth region in the second recorded image is an image obtained after processing is performed according to the target processing mode, the third region is an image region occupied by the second individual object in the second recorded image, and the fourth region is a region other than the third region in the second recorded image; and
stopping video recording and generating a video in response to a video recording stop operation of the user.

17. The electronic device according to claim 15 or 16, wherein when the instructions are executed by the electronic device, the electronic device is further enabled to perform the following steps:
before the stopping video recording and generating a video, determining a third individual object as the target object in response to a third operation of the user; and
displaying a fourth recorded image on the shooting interface, wherein an image of a fifth region in the fourth recorded image is displayed in color, an image of a sixth region in the fourth recorded image is an image obtained after processing is performed according to the target processing mode, the fifth region is an image region occupied by the third individual object in the fourth recorded image, and the sixth region is a region other than the fifth region in the fourth recorded image.

18. The electronic device according to claim 15 or 16, wherein when the instructions are executed by the electronic device, the electronic device is further enabled to perform the following steps:
before the stopping video recording and generating a video, switching the target processing mode in response to a fourth operation of the user; and
updating the image of the fourth region on the shooting interface according to a switched target processing mode.

19. The electronic device according to claim 13 or 14, wherein when the instructions are executed by the electronic device, the electronic device is further enabled to perform the following steps:
generating a photo in response to a photographing operation of the user, wherein the photo comprises the third region and the fourth region.

20. An electronic device, comprising:
one or more processors;
a memory; and
one or more computer programs, wherein the one or more computer programs are stored in the memory, the one or more computer programs comprise instructions, and when the instructions are executed by the electronic device, the electronic device is enabled to perform the image color retention method according to any one of claims 1 to 12.

21. A computer-readable storage medium, comprising computer instructions, wherein when the computer instructions are run on a computer, the computer is enabled to perform the image color retention method according to any one of claims 1 to 12.

22. A computer program product, wherein when the computer program product is run on a computer, the computer is enabled to perform the image color retention method according to any one of claims 1 to 12.
